# EUROPEAN PATENT APPLICATION

(11) **EP 2 216 294 A1**
(43) Date of publication of application: **11.08.2010**
(21) Application number: 08841622.7
(22) Date of filing: 20.10.2008
(51) Int. Cl.: C01B 33/033

(54) **APPARATUS AND PROCESS FOR THE PRODUCTION OF SILICON**

(30) Priority: 23.10.2007 JP 2007274831; 30.10.2007 JP 2007281416; 31.10.2007 JP 2007282861; 11.01.2008 JP 2008003845
(71) Applicant: Kinotech Solar Energy Corporation, Kawasaki-shi, Kanagawa 212-0013 (JP)
(72) Inventor: TAKEUCHI, Yoshinori, Kanagawa 212-0013 (JP); SAKAKI, Daisuke, Kanagawa 212-0013 (JP); OHASHI, Tadashi, Kanagawa 257-8566 (JP); MATSUMURA, Hisashi, Niigata 957-0197 (JP)
(74) Representative: Hertz, Oliver
(86) International application number: PCT/JP2008/002967
(87) International publication number: WO 2009/054117

(57) **Abstract**

A silicon manufacturing apparatus is disclosed as having a reactor tube (10) in which reaction occurs between zinc and silicon compound, zinc supply pipes (30, 30') having heating portions to heat zinc for generating zinc gas and zinc ejecting portions ejecting and supplying zinc gas to the reactor tube, a zinc feeding section (40A, 40B) feeding zinc into the zinc supply pipes, a silicon compound supply pipe (50, 50A, 50B, 50C, 50c, 54, 57, 90) having a silicon compound ejecting portion to eject and supply silicon compound gas to the reactor tube so as to allow silicon compound gas to flow from a lower side to an upper side in the reactor tube, and a heating furnace (20) disposed outside the reactor tube to define a heating region (a) accommodating therein a part of the reactor tube, the heating portion and the zinc ejecting section for heating the same so as to allow the reactor tube, through which zinc gas and silicon compound gas flow, to have the temperature distribution such that a temperature closer to a central axis (C) of the reactor tube is lower than that closer to a side circumferential wall of the reactor tube.

## Description

### [TECHNICAL FIELD]

The present invention relates to a silicon manufacturing apparatus and its related method and, more particularly, a silicon manufacturing apparatus and its related method in which a reactor tube has a temperature distribution with a temperature closer to a central axis of the reactor tube is lower than that closer to a side circumferential wall of the reactor tube.

### [BACKGROUND ART]

In recent years, a method of using a so-called zinc reduction method to reduce silicon tetrachloride with zinc to obtain silicon with high purity uses equipment that is simple in structure with less energy consumption while enabling the production of silicon of high purity with more than so-called six nines. This method has been focused with attention as a method of manufacturing silicon for solar cells regarded to rapidly expand in demand in the near future.

For the silicon manufacturing technology using such a zinc reduction method, Japanese Patent Application Laid-Open Publication Nos. 2002-234719, 2004-210594 and 2004-284935 disclose a structure that includes a reactor vessel and an evaporating vessel kept at a given temperature wherein zinc gas, gasified in the evaporating vessel, is controlled in temperature and supplied to a reactor vessel via a gas supply pipe.

Further, for the silicon manufacturing technology using such a zinc reduction method, Japanese Patent Application Laid-Open Publication Nos. 2003-95633 and 2003-342016 disclose a structure in which a species crystalline of silicon is supplied to a reactor vessel to grow up product silicon in a large size with a view to improving an efficiency of separating product silicon from reaction product gas with an increased yielding rate.

### [DISCLOSURE OF INVENTION]

### [Technical Problem]

However, with studies conducted by the present inventors, the zinc reduction method has been conducted in the first place wherein silicon has an atomic weight of 28.1 whereas zinc chloride has a molecular weight of 136.4 with zinc chloride of two molecules being yielded for one atom of silicon. That is, a yielding rate of zinc chloride is about ten times that of silicon. Thus, it is an important task to establish a manufacturing technology to increase the yielding rate of silicon while improving the efficiency of separating product silicon and product gas, resulting from reduction reaction, from each other. From such a standpoint, it is considered that the silicon manufacturing technology using such a zinc reduction method, disclosed in the patent laid-open publications described above, has room for further improvement in view of improving the efficiency of reduction reaction for improving the rate of yielding silicon while precluding an apparatus configuration from being complicated and simultaneously improving a separating and collecting efficiency for product silicon and product gas.

More particularly, with other studies conducted by the present inventors, the structure disclosed in Japanese Patent Application Laid-Open Publication Nos. 2002-234719, 2004-210594 and 2004-284935 has required a more adapted structure to have further improved reduction reaction efficiency in which, for instance, gasified zinc needs to be supplied from the evaporating vessel to the reactor vessel without causing the condensation of gasified zinc. To this end, there is a need for separately add a heater for heating a supply system for zinc gas leading from the evaporating vessel to the reactor vessel, causing the apparatus configuration to be complicated.

Also, with the structure disclosed in Japanese Patent Application Laid-Open Publication Nos. 2003-95633 and 2003-342016, further, it is intended to improve the yielding rate of silicon while improving efficiency of separating product silicon and product gas from each other. However, this structure is of the type wherein the species crystalline of silicon is separately supplied to the reactor vessel to grow up product silicon. Therefore, the resulting structure becomes complicated with difficulty, encountered in collecting silicon that is autonomously formed in nucleation to be adhered onto and precipitated on an inner surface of the reactor vessel with limitations, being found in improving the collecting rate of silicon.

The present invention has been completed with the above studies conducted by the present inventors in mind and has an object to provide a silicon manufacturing apparatus and its related method which can improve efficiency of reduction reaction to improve a yielding rate of silicon while simultaneously improving a rate of separating and collecting product silicon and product gas from each other.

### [Technical Solution]

To solve the above issues, one aspect of the present invention provides a silicon manufacturing apparatus comprising a reactor tube standing upright with a central axis extending in a vertical direction for reacting zinc and silicon compound, a zinc supply pipe having a heating portion for heating zinc to produce zinc gas and a zinc ejecting portion ejecting and supplying zinc gas to the reactor tube, a zinc feeding section for feeding zinc into the zinc supply pipe, a silicon compound supply pipe ejecting and supplying silicon compound gas into the reactor tube so as to allow silicon compound gas to flow through the reactor tube from a lower side to an upper side therein, and a heating furnace disposed outside the reactor tube to define a heating region in which a part of the reactor tube, the heating portion and the zinc ejecting portion are placed to allow the reactor tube, through which zinc gas and silicon compound gas flow, to have a temperature distribution under which a temperature closer to the central axis of the reactor tube is lower than that closer to a side circumferential wall of the reactor tube.

Another aspect of the present invention provides a method of manufacturing silicon, the method comprising the steps of heating a reactor tube, vertically standing upright, with a heating furnace disposed around the reactor tube, ejecting and supplying zinc gas into the reactor tube, supplying silicon compound gas into the reactor tube by ejecting silicon compound gas upward along a central axis of the reactor tube from an area lower than a position in which zinc gas is ejected, and producing silicon powder upon reducing silicon compound gas with zinc gas under a temperature distribution maintained in the reactor tube such that a temperature closer to the central axis of the reactor tube is lower than that closer to a side circumferential wall of the reactor tube.

### [Advantageous Effects]

In the silicon manufacturing apparatus and its related method of the present invention, efficiency of reduction reaction can be improved to increase a yielding rate of silicon, while simultaneously improving a rate of separating and collecting product silicon and product gas from each other.

### [BRIEF DESCRIPTION OF DRAWINGS]

FIG 1 is a schematic cross-sectional view of a silicon manufacturing apparatus of a first embodiment according to the present invention.
FIG 2 is a schematic cross-sectional view of a silicon manufacturing apparatus of a second embodiment according to the present invention.
FIG 3 is a schematic cross-sectional view of a silicon manufacturing apparatus of a third embodiment according to the present invention.
FIG 4 is a schematic cross-sectional view of a silicon manufacturing apparatus of a fourth embodiment according to the present invention.
FIG 5 is a schematic cross-sectional view of a silicon manufacturing apparatus of a fifth embodiment according to the present invention.
FIG 6 is a schematic cross-sectional view of a silicon manufacturing apparatus of a sixth embodiment according to the present invention.
FIG 7 is a schematic cross-sectional view of a silicon manufacturing apparatus of a seventh embodiment according to the present invention.
FIG 8 is an enlarged cross-sectional view of an extending portion as one example of the present embodiment.
FIG 9 is an enlarged cross-sectional view of an extending portion as another example of the present embodiment.
FIG 10 is an enlarged cross-sectional view of an extending portion as another example of the present embodiment.
FIG 11 is a schematic cross-sectional view of a silicon manufacturing apparatus of an eighth embodiment according to the present invention.
FIG 12 is a schematic cross-sectional view of a silicon manufacturing apparatus of a ninth embodiment according to the present invention.
FIG 13 is a schematic cross-sectional view of a silicon manufacturing apparatus of a tenth embodiment according to the present invention.
FIG 14 is an enlarged cross-sectional view of a zinc feeding section of the present embodiment.
FIG 15 is a schematic cross-sectional view of a silicon manufacturing apparatus of an eleventh embodiment according to the present invention.
FIG 16 is a schematic cross-sectional view of a silicon manufacturing apparatus of a twelfth embodiment according to the present invention.
FIG 17 is a schematic cross-sectional view of a silicon manufacturing apparatus of a thirteenth embodiment according to the present invention.
FIG 18 is a schematic cross-sectional view of a silicon manufacturing apparatus of a fourteenth embodiment according to the present invention.
FIG 19 is a schematic cross-sectional view of a silicon manufacturing apparatus of a fifteenth embodiment according to the present invention.
FIG 20 is a schematic cross-sectional view of a silicon manufacturing apparatus of a sixteenth embodiment according to the present invention.
FIG 21 is a schematic cross-sectional view of a silicon manufacturing apparatus of a seventeenth embodiment according to the present invention.
FIG 22 is a schematic cross-sectional view of a silicon manufacturing apparatus of an eighteenth embodiment according to the present invention.
FIG 23 is a schematic cross-sectional view of a silicon manufacturing apparatus of a nineteenth embodiment according to the present invention.
FIG 24 is an enlarged cross-sectional view taken on line A-A of FIG 23.
FIG 25 is an enlarged cross-sectional view taken on line B-B of FIG 23.
FIG 26 is a schematic cross-sectional view of a silicon manufacturing apparatus of a twentieth embodiment according to the present invention.
FIG 27 is an enlarged cross-sectional view taken on line C-C of FIG. 26.
FIG 28 is an enlarged cross-sectional view taken on line D-D of FIG 26.
FIG 29 is a schematic cross-sectional view of a silicon manufacturing apparatus of a twenty-first embodiment according to the present invention.
FIG 30 is an enlarged cross-sectional view taken on line E-E of FIG 29 and simultaneously, an enlarged cross-sectional view taken on line F-F of FIG. 29.
FIG 31 is an enlarged cross-sectional view taken on line G-G of FIG 29.
FIG 32 is an enlarged cross-sectional view taken on line H-H of FIG 29.

### [BEST MODE FOR CARRYING OUT THE INVENTION]

Now, silicon manufacturing apparatuses and related methods of various embodiments according to the present invention will be described below in detail with reference to accompanying drawings. Throughout the drawings, an x-axis, a y-axis and z-axis represent a three-axis orthogonal coordinate system with the z-axis laying in a vertical direction in which a gravitational force is oriented in a negative direction on the z-axis. Further, a positive direction on the z-axis will be referred to as an upper direction and the negative direction on the z-axis will be referred to as a lower direction.

First, the silicon manufacturing apparatus of a first embodiment according to the present invention will be described below in detail.

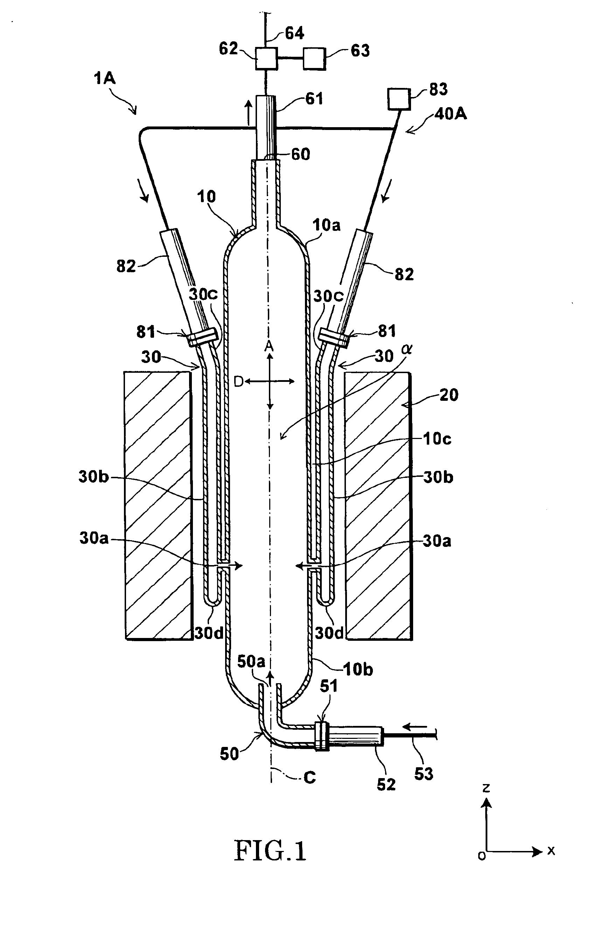

FIG 1 is a schematic cross-sectional view of the silicon manufacturing apparatus of the present embodiment.

As shown in FIG 1, the silicon manufacturing apparatus 1A of the present embodiment includes a reactor tube 10, vertically standing upright on the same axis as the central axis C, within which a reduction reaction occurs between a silicon compound, contained in silicon compound gas, and zinc contained in zinc gas, a heating furnace 20 vertically standing upright on the same axis as the central axis C for heating a circumferential wall (in a radial direction D of the reactor tube 10 in FIG 1) of the reactor tube 10, a pair of zinc supply pipes 30 for supplying zinc gas to an inside of the reactor tube 10, a zinc feeding mechanism 40A for feeding zinc into the zinc supply pipes 30, and a silicon compound supply pipe 50 for supplying silicon compound gas to the inside of the reactor tube 10. Also, the silicon compound typically includes silicon tetrachloride.

The reactor tube 10 is comprised of a tubular cylindrical member having an upper portion 10a and a lower portion 10b between which a central portion 10c is formed in a circumferential wall around the central axis C parallel to the z-axis. The reactor tube 10 has the upper portion 10a to which an exhaust port 60 is connected for exhausting reaction gas resulting from reaction between zinc and silicon compound, and the lower portion 10b to which the silicon compound supply pipe 50 is connected. In addition, the reactor tube 10 is made of quartz glass with an inner diameter (a distance between inner surfaces in the radial direction D in FIG 1) of, for instance, 500mm.

The heating furnace 20 has a annular cylindrical shape having the same axis as the central axis C and the zinc supply pipes 30 vertically stand upright to be surrounded with the heating furnace 20.

The zinc supply pipes 30 extend in a space between the reactor tube 10 and the heating furnace 20. Each zinc supply pipe 30 has a connecting portion 30a, having a communicating port (a zinc ejection port) opening to the inside of the reactor tube 10 and directly connected to the central portion 10c of the reactor tube 10, a heating portion 30b operative to heat zinc fed from the zinc feeding mechanism 40A to obtain zinc gas, and an upper portion 30c communicating with the zinc feeding mechanism 40A. In addition, the connecting portion 30a functions as a zinc ejecting portion. Moreover, various connecting portions, used in various embodiments described below, function as zinc ejecting portions, respectively.

As used herein, the term "directly connected" indicates a structure in which the reactor tube 10 and the zinc supply pipes 30 are directly connected to each other in the absence of connecting members. With such a structure, the reactor tube 10 and the zinc supply pipes 30 are juxtaposed in a unitary structure and the zinc supply pipes 30 are considered to be substantially equivalent to the reactor tube with a large tube diameter. Thus, no remarkable increase occurs in labor hour caused in mounting or dismounting component parts to perform maintenances. In addition, since the maintenance per se needs to be less-frequently conducted; it is far difficult to actually configure the connecting members without increasing cost of whole structure; and an adequate airtightness is to be maintained at high temperatures beyond 930°C, with such a view in consideration, the reactor tube 10 and the zinc supply pipes 30 are more preferable to be directly connected to each other.

The zinc supply pipes 30 are placed in a pair in axial symmetry with respect to the central axis C of the reactor tube 10 and communicate with the circumferential wall of the reactor tube 10 at a pair of connecting portions 30a in axial symmetry with respect to the central axis C. The zinc supply pipes 30 are made of quartz glass each with an inner diameter (a distance between inner surfaces in the radial direction D in FIG 1) of, for instance, 200mm. Also, each connecting portion 30a has an inner diameter (a distance between inner surfaces in a direction A perpendicular to the radial direction D in FIG 1) of, for instance, 100mm.

Further, the number of the zinc supply pipes 30 may not be limited to the pair and a plurality of zinc supply pipes may be preferably disposed in areas around the central axis C. Such a structure enables zinc to be fed in a further increased volume. Furthermore, the plural zinc supply pipes 30 may include respective connecting portions 30a placed in opposition to each other in the radial direction of the reactor tube 10. Such a structure enables an increase in reactivity between zinc and silicon compound in the reactor tube 10, thereby yielding silicon at increased rate.

Moreover, with an ease of fabricating the reactor tube 10 and maintenance ability to be taken into consideration, the zinc supply pipes 30 may take a structure that is simply and directly connected to the reactor tube 10 in the radial direction D. However, for a gas stream to be adjusted in the reactor tube 10, the pipe may have an extension extending from the connecting portion 30a to the inside of the reactor tube 10 and, in addition, the pipe may have a plurality of zinc ejecting ports located in upper and lower positions or in circumferentially spaced positions.

Further, the zinc supply pipes 30 may preferably have extending portions 30d, extending downward from the respective heating portions 30b to areas beyond the connecting portions 30a, which are preferably located in a heating region α. Such extending portions 30d can temporarily accumulate zinc that is fed from the zinc feeding mechanism 40A and not gasified. Zinc, accumulated and melted in the extending portions 30d, can be subjected to heat generated in the heating furnace 20 to evaporate, thereby enabling an increase in the amount of zinc being evaporated.

As set forth above, the heating furnace 20 is disposed around the central portion 10c of the reactor tube 10, the connecting portions 30a and the heating portions 30b of the zinc supply pipes 30 and also arranged in structure so as to surround the central portion 10c of the reactor tube 10, the connecting portions 30a and the heating portions 30b of the zinc supply pipes 30. This allows the central portion 10c of the reactor tube 10, and the connecting portions 30a and the heating portions 30b of the zinc supply pipes 30 to be placed inside the heating region α.

As used herein, the term "heating region" indicates a region that is heated with the heating furnace 20 for manufacturing silicon in a zinc reduction method. More particularly, the heating region refers to the region α surrounded with the heating furnace 20 placed in the area around the reactor 10 and the zinc supply pipes 30.

That is, the heating furnace 20 has a structure to heat the central portion 10c of the reactor tube 10 for thereby heating silicon compound gas and zinc gas fed to the reactor tube 10 for facilitating reduction reaction between these components while simultaneously heating the connecting portions 30a and the heating portions 30b of the zinc supply pipes 30. The heating furnace 20 may have heating temperatures kept in a value of 950°C or higher and 1200°C or less at which zinc gas and silicon compound gas are heated to a temperature exceeding 930°C. If the heating temperature is lower than 950°C, then it becomes difficult to suppress silicon from precipitating on the wall surface. In contrast, if the heating temperature exceeds 1200°C, the reactor tube 10 is unfavorably softened due to the structure made of the quartz glass tube. Preferably, the heating temperature may fall in a value ranging from 1000°C or more and 1200°C or less.

With such a structure, zinc is fed from the zinc feeding mechanism 40A to the heating pipes 30b of the zinc supply pipes 30 and gasified due to heat delivered from the heating furnace 20. Subsequently, zinc passes through the connecting portions 30a to be ejected into the reactor tube 10 for supply thereto. Therefore, no need arises for separately providing a heating element especially for heating only the zinc supply pipes 30.

Such a structure allows the silicon compound to be introduced to the lower portion 10b of the reactor tube 10 while permitting zinc to be introduced to the reactor tube 10 at the upper portion thereof. From a standpoint of reactive gases in heat migration, such a structure is preferably effective to achieve reaction under a condition with equalized stoichiometric proportions or reaction under a condition with the amount of silicon compound in excess.

The zinc feeding mechanism 40A includes zinc feeding pipes 82, communicating with the upper portions 30c of the zinc supply pipes 30 via joint portions 81, and a pair of zinc supply units 83 from which solid (powdered) zinc is caused to drop for supply into the zinc feeding pipes 82 due to a gravitational force of zinc. In addition, the joint portions 81, the zinc feeding pipes 82 and the zinc supply unit 83 are located in areas outside the heating region α of the heating furnace 20, respectively. With such a structure, the amount of zinc to be supplied to the zinc supply pipes 30 can be reliably controlled in a simplified fashion, resulting in an effect of forming the apparatus in a simplified structure as a whole. In addition, with the plurality of zinc supply pipes 30 being provided, zinc supply units 83 may be provided for the zinc supply pipes 30, respectively. In an alternative, a single zinc supply unit 83 may be provided with a structure in which the amounts of zinc being introduced can be set to values discretely different from each other.

Further, sine the joint portions 81 are located in areas outside the heating region α of the heating furnace 20, it may suffice for the joint portions 81 to include joint members each having a certain level of heat resistance. That is, the apparatus can be manufactured at a lower cost that that employing joint members generally used under a high temperature above 930°C. Further, solid (powdered) zinc is caused to drop into the zinc feeding pipes 82 at areas outside the heating region α of the heating furnace 20. Thus, during a stage of feeding zinc into the zinc feeding pipes 82, zinc has no adverse affect from the heating furnace 20 with no risk of causing solid (powdered) zinc to be melted and adhered to inner walls of the pipes. In addition, under a situation where the zinc feeding mechanism 40A is placed in the same casing as that of the heating furnace 20, there is a possibility for the zinc feeding mechanism 40A to be adversely affected with radiation heat. Therefore, a cooling device (not shown) may be located in an area close proximity to the zinc feeding pipes 82.

The silicon compound supply pipe 50, connected to the reactor tube 10 at the lower portion 10b thereof, has a distal end portion formed with a silicon compound ejection port 50a extending to the reactor tube 10 in coaxial relation to the central axis C. The silicon compound ejection port 50a functions as a silicon compound ejecting portion from which silicon compound gas is ejected into the reactor tube 10 for supply thereto in a direction along the central axis C. In addition, the silicon compound supply pipe 50 has an outside area held in communication with a silicon compound introduction pipe 52 and a silicon compound gas supply pipe 53 via a joint portion 51. Further, the pair of connecting portions 30a have through-holes (zinc ejecting ports) through which zinc gas is ejected in a direction perpendicular to a direction in which silicon compound gas is ejected from the silicon compound ejecting port 50a. However, the present invention is not limited to such a zinc gas ejecting direction and a zinc gas ejecting direction may be oriented from a lower side to an upper side facing the silicon compound gas ejecting direction. Moreover, in the embodiments described below, the silicon compound ejection port may function as a silicon compound ejecting portion.

Connected to the exhaust port 60, formed on the upper portion 10a of the reactor tube 10, is an exhaust pipe 61 which is connected to a silicon reservoir 63, operative to accumulate product silicon, and an exhaust system 64 via a separator 62 operative to separate product silicon from reaction product gas.

Next, description will be made of a method of manufacturing silicon using the silicon manufacturing apparatus 1A of the present embodiment. Also, a series of steps to be conducted in such a manufacturing method will be controlled by the controller, in accordance with given programs by referring to detected values, delivered from sensors, and database or the like. The sensors and the controller are omitted in the drawings. Of course, it doesn't matter if manually operated steps are mixed in such a method.

Solid (powdered) zinc is caused to drop from the pair of zinc supply units 83 due to gravitational force of zinc and fed to the zinc feeding pipes 82. Zinc, fed in such a way, moves into the zinc supply pipes 30 to reach the upper portions 30c thereof. Here, the heating furnace 20 allows the connecting portions 30a and the heating portions 30b of the zinc supply pipes 30 to be kept at high temperatures above 930°C that is a boiling point of zinc. Thus, zinc is caused to free-fall through the heating portions 30b due to a gravitational force of zinc to be gasified. Gasified zinc passes through the connecting portions 30a to be ejected and supplied into the reactor tube 10.

Meanwhile, silicon compound gas passes from the silicon compound gas supply system 53 into the silicon compound introducing pipe 52 to be ejected and supplied upward from the silicon compound ejecting port 50a into the reactor tube 10 along the central axis C.

Here, silicon tetrachloride gas, typically employed as silicon compound, may be preferably controlled using a heater or the like (not shown) to heat a supply path (such as, for instance, the silicon compound introducing pipe 52) at a temperature not to cause silicon tetrachloride gas to be liquefied, i.e. a temperature ranging from 57°C or more, representing a boiling point, and 100°C or less. If such a temperature is less than the boiling point, then silicon tetrachloride gas is liquefied, resulting in a difficulty of supplying silicon tetrachloride gas to the reactor 10 at adequate supply rate. On the contrary, if such a temperature exceeds 100°C, then a gas stream, ejected upward to the reactor tube 10 along the central axis C, has an increasing temperature. This results in a difficulty of controlling the reactor tube 10 so as to allow the inside of the reactor tube 10 to have a temperature distribution in which a temperature of an area near the central axis C is lower than that of another area near a side circumferential wall.

That is, when this takes place, silicon compound gas is ejected upward in the reactor tube 10 along the central axis C at a temperature relatively lower than that of zinc gas. In this moment, the reactor tube 10 is heated from outside with the heating furnace 10. This provides a temperature distribution under which the temperature of the reactor tube 10 in an area near the central axis C is lower than that of another area near the side circumferential wall (at the central portion 10c). That is, with such a temperature distribution, typically, the temperature progressively decreases in the reactor tube 10 along the radial direction D in a concentric fashion from the side circumferential wall to the central axis C. With the reactor tube 10 having the temperature distribution arranged in such a pattern, the silicon compound is reduced with zinc, thereby producing silicon powder and zinc chloride. Also, silicon powder means fine-powder shaped or needle shaped silicon.

More particularly, the zinc gas stream merges into the ejected silicon tetrachloride gas stream in the reactor tube 10 and is deflected toward a direction in which the silicon tetrachloride gas stream flows. This causes both zinc gas and silicon compound gas to flow through the reactor tube 10 along the central axis C thereof. Here, the temperature distribution in the reactor tube 10 is so adjusted as to allow the temperature near the central axis C to be lower than that near the side circumferential wall. This enables zinc and silicon compound, acting as materials for reduction reaction, to be concentrated to the vicinity of the central axis C. Therefore, silicon powder precipitates and glows up in the area close proximity to the central axis C of the reactor tube 10. When this takes place, resulting fine silicon contributes to causing silicon powder to glow up in large size. That is, in such a way, product silicon powder can be grown up at high efficiency in the area close proximity to the central axis C while precluding silicon from precipitating on the side circumferential wall of the reactor tube 10, achieving an improved yielding rate and an improved separating and collecting rate of silicon powder.

With the steps conducted as mentioned above, by adjusting the of raw materials supplied to the reactor tube 10 and the temperatures, the flow speeds and the ejecting directions of reaction gases, product silicon powder is gown up in a needle shape with an average diameter of, for instance, several microns to several millimeters and a length in the order of from several tens microns to several tens millimeters. Further, these needle-like particles act as an aggregate with an entire configuration formed in a sea-urchin shape.

Silicon and zinc chloride, produced in such a way, are discharged from the exhaust port 60 of the reactor tube 10 to the outside of the reactor tube 10 through the exhaust pipe 61. Subsequently, silicon and zinc chloride are separated from each other in the separator 62 with silicon being delivered to the silicon reservoir 63 and zinc chloride being delivered to the exhaust gas system 64.

Further, with a view to increasing an ejecting pressure to feed the silicon compound to the reactor tube 10 in a smooth flow to allow the same to pass at an appropriate flow speed in the reactor tube 10, carrier gas such as inactive gas or reduction gas may be preferably mixed with silicon compound gas to be supplied from the silicon compound ejection port 50a to the reactor tube 10. More preferably, inactive gas is employed for such a purpose. Such carrier gas may be introduced into the silicon compound introducing pipe 52 from a carrier gas source (not shown) that is separately provided. Although the silicon compound ejecting direction related to silicon gas compound gas lies in a direction parallel to the central axis C, silicon gas compound gas may be ejected in a direction perpendicular to the central axis C provided that silicon gas compound gas is ejected from the lower side to the upper side.

Examples of such inactive gas may preferably include helium gas, neon gas or argon gas or the like. Examples of reduction gas may preferably include hydrogen gas. Although nitrogen gas may be conceivably employed as reduction gas, nitrogen gas unfavorably results in an effect of causing product silicon to be nitrided.

Further, when supplying carrier gas into the reactor tube 10, carrier gas may not be mixed with silicon compound gas and carrier gas supply pipe (not shown) may be connected to the lower portion 10b of the reactor tube 10 for only carrier gas to be supplied thereto.

Likewise, further, carrier gas supply units (not shown) may be provided in the zinc supply pipes 30, respectively, for supplying thereto with inactive gas or reduction gas. This enables zinc gas to flow from the zinc supply pipes 30 to the reactor gas 10 in a smooth fashion.

Furthermore, a ratio (molar ratio) of carrier gas in volume to be supplied to the reactor tube 10 may preferably fall in a value of 10% or more and 90% or less. More preferably, such a ratio of carrier gas in volume may fall in a value of 25% or more and 80% or less. If the ratio of carrier gas is less than 10%, heat migration is weak and unfavorable effect is present with a difficulty of adequately preventing silicon from precipitating on the inner wall surface of the reactor tube 10. On the contrary, if the ratio of carrier gas exceeds 90%, then the raw materials become too low in concentration with the resultant formation of silicon particles in too microscopic size, resulting in a difficulty of producing silicon powder in a large size,

With the silicon manufacturing apparatus of the present embodiment set forth above, an apparatus configuration can be simplified as a whole with improved efficiency achieved in performing reduction reaction to improve a rate of yielding silicon while concurrently enabling improvement in efficiency of separating and collecting product silicon and product gas.

### (Second Embodiment)

Next, a silicon manufacturing apparatus of a second embodiment according to the present invention will be described below in detail with reference to the accompanying drawings.

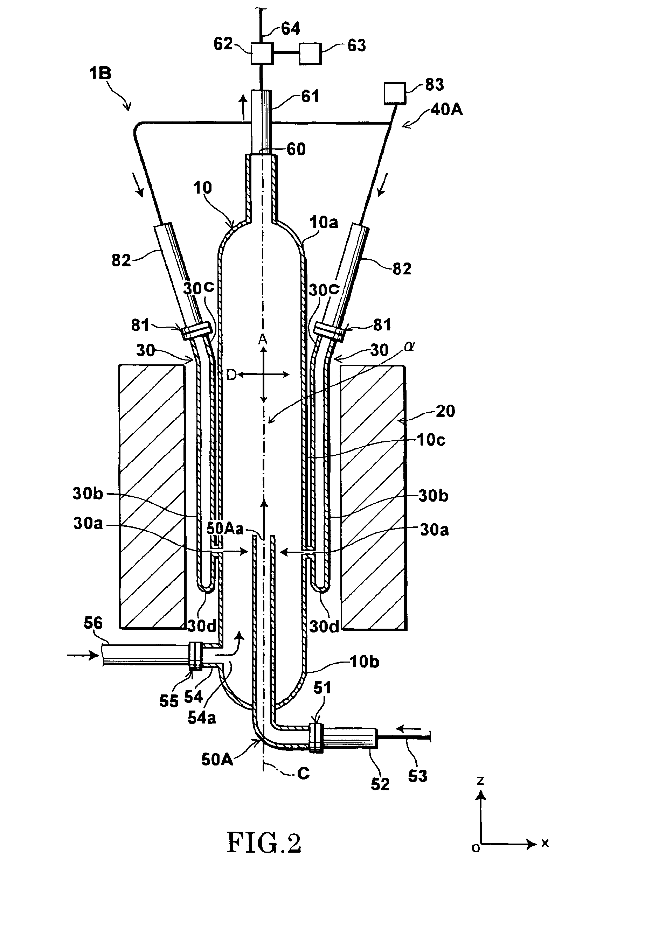

FIG 2 is a schematic cross-sectional view of the silicon manufacturing apparatus of the present embodiment.

The silicon manufacturing apparatus 1B of the present embodiment differs from the first embodiment in structure in that the silicon compound supply pipe 50 is replaced by a silicon compound supply pipe 50A and, further, the lower portion 10b of the reactor tube 10 is provided with a silicon compound supply pipe 54 made of quartz glass with remaining structures being identical to each other. Therefore, the present embodiment will be described below with a focus on such differing points and like or corresponding component parts bear like reference numerals to suitably simplify the description or to omit such a description.

More particularly, the silicon compound supply pipe 50A has a silicon compound ejection port 50Aa located in the heating region α at an upper side above the position at which the respective connecting portions 30a of the pair of zinc supply pipes 30 are connected to the reactor tube 10.

Further, the silicon compound supply pipe 54 has a silicon compound ejection por54a disposed outside the heating region α in an area below the positions of the pair of the respective connecting portions 30a. Such a silicon compound supply pipe 54 is held in communication with a silicon compound gas introducing pipe 56 via a joint portion 55.

Here, the respective connecting portions 30a of the pair of zinc supply pipes 30 and the silicon compound ejection ports 54a and 50Aa are located in the reactor tube 10 in multiple stages with the silicon compound ejection ports 54a, the pair of connecting portions 30a and the silicon compound ejection port 50Aa in an upward order.

With the provision of such a structure, silicon powder with a large size can be manufactured with no need for a species crystalline of silicon to be separately fed. This reason will be described below.

The silicon compound, fed from the silicon compound supply pipe 54, flows upward in the heating region α to be reduced with zinc supplied from the connecting portions 30a placed in the upper sides, thereby producing silicon powder. When this takes place, the amount of supplied zinc is stoichiometrically adjusted to be greater in excess than the amount of silicon compound supplied from the silicon compound ejection port 54a. This allows product silicon powder to move upward together with unreacted zinc supplied from the connecting portions 30a. Thereafter, when reduction reaction occurs between the silicon compound, supplied from the silicon compound ejection port 50Aa of the silicon compound supply pipe 50A, and unreacted zinc, silicon powder acts as species crystalline.

Therefore, silicon powder with a large size can be manufactured with no need for the species crystalline to be separately fed. This allows the separator 62 to have an increased separation efficiency with a resultant increase in a rate of collecting silicon powder, enabling the production of silicon powder at low cost.

Further, the amount of silicon compound, supplied from the silicon compound ejection ports 54a and 50Aa, and the amount of zinc, supplied from the connecting portions 30a, may preferably fall in a stoichiometrically equaled relationship or may be adjusted so as to allow the amount of silicon compound to be slightly in excess. By so doing, it becomes possible to prevent zinc gas from escaping to the exhaust pipe 61 to avoid zinc from adhering onto the tube wall at a low temperature.

### (Third Embodiment)

Next, a silicon manufacturing apparatus of a third embodiment according to the present invention will be described below in detail with reference to the accompanying drawings.

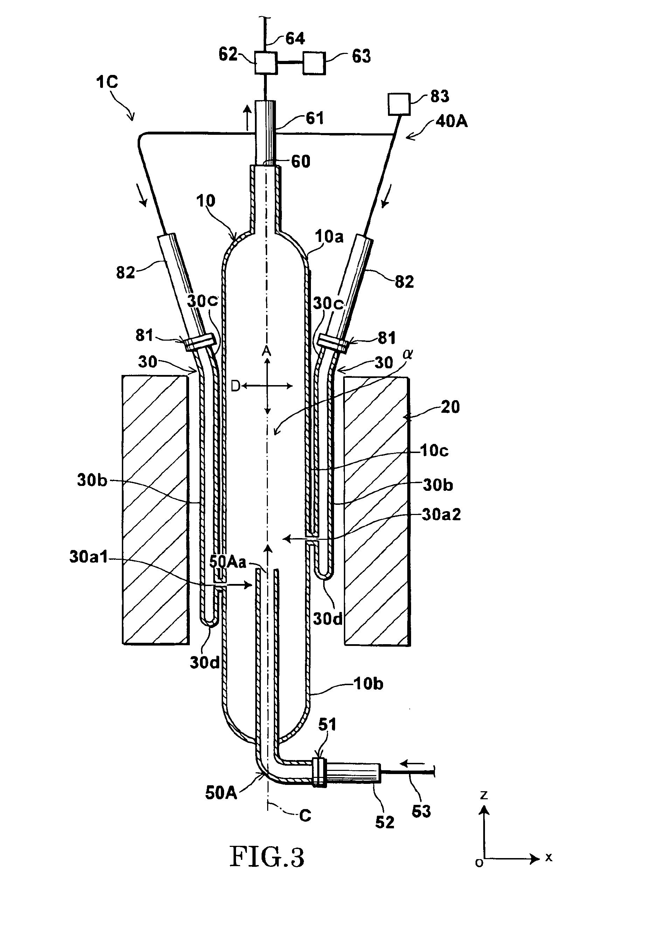

FIG 3 is a schematic cross-sectional view of the silicon manufacturing apparatus of the present embodiment.

The silicon manufacturing apparatus 1C of the present embodiment differs from the second embodiment in structure in that no silicon compound supply pipe 54 is provided whereas the connecting portions 30a of the pair of zinc supply pipes 30, placed in opposition to each other with respect to the radial direction D of the reactor tube 10, are replaced by connecting portions 30a1 and 30a2 connected to the reactor tube 10 at different positions with respect to an axial direction A with remaining structures being identical to each other. Here, the silicon compound ejection port 50Aa is placed in the heating region α at an upper side than one connecting portion 30a1 and at a lower side than the other connecting portion 30a2. Therefore, the present embodiment will be described below with a focus on such differing points and like or corresponding component parts bear like reference numerals to suitably simplify the description or to omit such a description.

More particularly, the connecting portions 30a1 and 30a2 of the pair of zinc supply pipes 30 and the silicon compound ejection port 50Aa are placed in multiple stages in an upward direction of the reactor tube 10 in order of the connecting portion 30a1, the silicon compound ejection port 50Aa and the connecting portion 30a2.

With the provision of such a structure, like the second embodiment, silicon powder with a large size can be manufactured with no need for a species crystal of silicon being separately fed. This reason will be described below.

Zinc, supplied from the connecting portion 30a1, moves upward in the reactor tube 10 to be reduced with the silicon compound supplied from the silicon compound ejection port 50Aa, thereby producing silicon powder. When this takes place, the amount of zinc supplied from the connecting portion 30a1 is stoichiometrically adjusted to be less than the amount of silicon compound supplied from the silicon compound ejection port 50Aa. This allows product silicon powder to move upward in the reactor tube 10 together with unreacted silicon compound, supplied from the silicon compound ejection port 50Aa, which is not reduced with zinc supplied from the connecting portion 30a1. Thereafter, when reduction reaction occurs between zinc, supplied from the connecting portion 30a2, and unreacted silicon compound, silicon powder acts as species crystalline.

Therefore, silicon powder with a large size can be manufactured with no need for the species crystalline of silicon to be separately fed. This results in an increase in separation efficiency of the separator 62 to increase a rate of collecting silicon powder, enabling the production of silicon powder at low cost.

Furthermore, the amount of silicon compound, supplied from the silicon compound ejection port 50Aa, and the total amount of zinc, supplied from the connecting portions 30a1 and 30a2, may preferably fall in a stoichiometrically equaled relationship or may be adjusted so as to allow the amount of silicon compound to be slightly in excess. By so doing, it becomes possible to prevent zinc gas from escaping to the exhaust pipe 61 to avoid zinc from adhering onto the tube wall at a low temperature.

### (Fourth Embodiment)

Next, a silicon manufacturing apparatus of a fourth embodiment according to the present invention will be described below in detail with reference to the accompanying drawings.

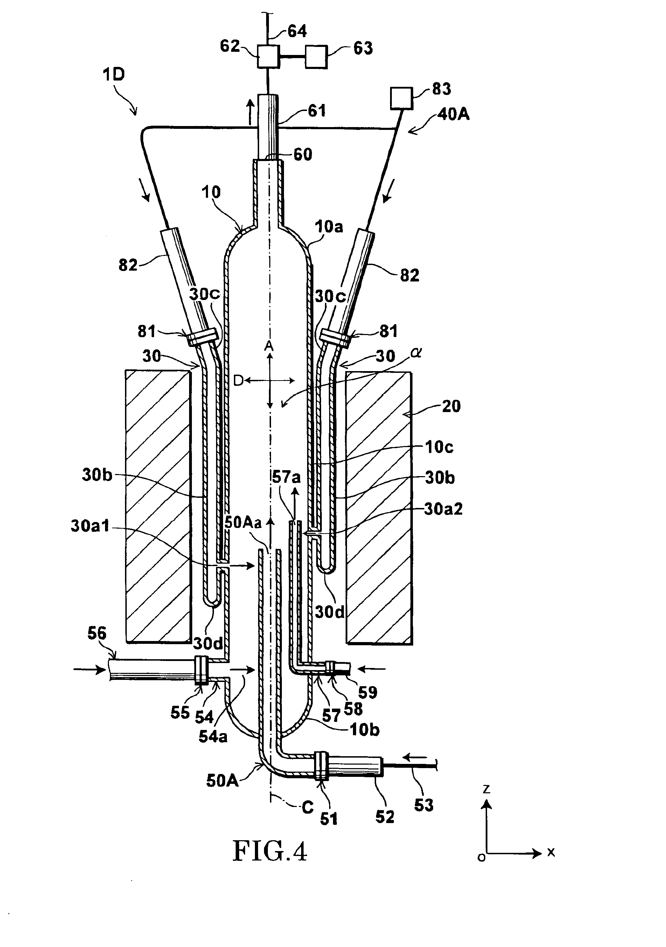

FIG 4 is a schematic cross-sectional view of the silicon manufacturing apparatus of the present embodiment.

The silicon manufacturing apparatus 1D of the present embodiment differs from the second embodiment in respect of a feature described below with remaining structures being identical to each other. That is, the silicon manufacturing apparatus 1D includes the silicon compound ejection port 50Aa and the silicon compound supply pipe 54 described with reference to the second embodiment, the connecting portions 30a1 and 30a2 of the pair of zinc supply pipes 30 described with reference to the third embodiment, and a silicon compound supply pipe 57 made of quartz glass. Therefore, the present embodiment will be described below with a focus on such differing points and like or corresponding component parts bear like reference numerals to suitably simplify the description or to omit such a description.

More particularly, the silicon compound supply pipe 57, located to be closer to the central axis C to the extent not to interfere with the silicon compound supply pipe 50A, has a silicon compound ejection port 57a placed in the heating region α at an area above the connecting portion 30a2 for supplying a silicon compound. In addition, like the other silicon compound supply pipes, the silicon compound supply pipe 57 communicates with a silicon gas introducing pipe 59 via a joint portion 58.

Here, the connecting portions 30a1 and 30a2 of the pair of zinc supply pipes 30 and silicon compound ejection ports 54a, 50Aa and 57a are placed in multiple stages in order of the silicon compound ejection ports 54a, the connecting portion 30a1, the silicon compound ejection port 50Aa, the connecting portion 30a2 and the silicon compound ejection port 57Aa.

Such a structure makes it possible to allow reactions, described with reference to the second and third embodiments, to be initiated in further increased stages. Therefore, silicon powder with a large size can be manufactured with no need for the species crystalline of silicon to be separately fed. This results in an increase in separation efficiency of the separator 62 to increase a rate of collecting silicon powder, enabling the production of silicon powder at low cost.

Furthermore, even with the present embodiment, the amount of silicon compound, supplied from the silicon compound ejection ports 54a, 50Aa and 57a, and the total amount of zinc, supplied from the connecting portions 30a1 and 30a2, may preferably fall in a stoichiometrically equaled relationship or may be preferably adjusted so as to allow the amount of silicon compound to be slightly in excess.

### (Fifth Embodiment)

Next, a silicon manufacturing apparatus of a fifth embodiment according to the present invention will be described below in detail with reference to the accompanying drawings.

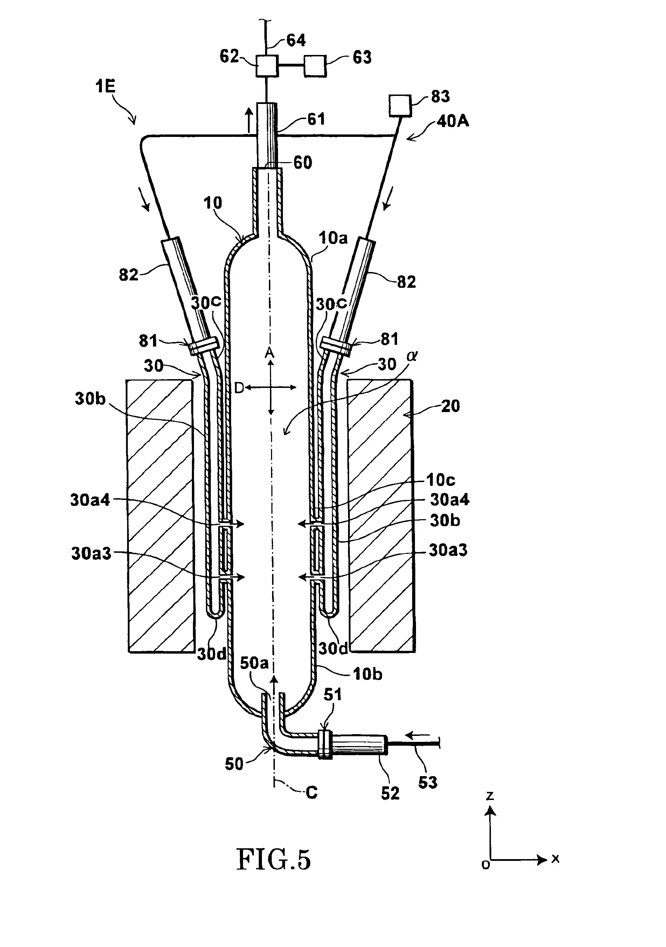

FIG 5 is a schematic cross-sectional view of the silicon manufacturing apparatus of the present embodiment.

The silicon manufacturing apparatus 1E of the present embodiment differs from the first embodiment in that pairs of connecting portions 30a, placed in opposition to each other in the radial direction D of the reactor tube 10, are placed in plural positions (with two connecting pipes 30a3 and 30a4 in FIG 5) spaced in the axial direction A of the reactor tube 10 with remaining structures being identical to each other. Therefore, the present embodiment will be described below with a focus on such differing points and like or corresponding component parts bear like reference numerals to suitably simplify the description or to omit such a description.

With such a structure, silicon powder with a large size can be manufactured with no need for the species crystalline of silicon to be separately fed. This reason will be described below.

The silicon compound supplied from the silicon compound ejection port 50a moves upward in the reactor tube 10 to be reduced with zinc, supplied from the pair of connecting portions 30a3 on a first stage, thereby producing silicon powder. When this takes place, the amount of zinc supplied from the pair of connecting portions 30a3 is stoichiometrically adjusted to be less than the amount of silicon compound supplied from the silicon compound ejection port 50a. Resulting silicon powder moves upward in the reactor tube 10 together with unreacted silicon compound that is supplied from the silicon compound ejection port 50a and is not reduced with zinc supplied from the pair of connecting portions 30a3 on the first stage. Thereafter, when reduction reaction is caused to occur between zinc, supplied the pair of connecting portions 30a4 on a second stage, and unreacted silicon compound, silicon powder, which moves upward, acts as species crystalline.

Therefore, silicon powder with a large size can be manufactured with no need for the species crystalline of silicon to be separately fed. This increases separation efficiency of the separator 62, enabling the production of silicon powder at low cost.

Even with the present embodiment, the amount of silicon compound, supplied from the silicon compound ejection port 50a, and the total amount of zinc, supplied from the connecting portions 30a3 and 30a4, may preferably fall in a stoichiometrically equaled relationship or may be preferably adjusted so as to allow the amount of silicon compound to be slightly in excess.

### (Sixth Embodiment)

Next, a silicon manufacturing apparatus of a sixth embodiment according to the present invention will be described below in detail with reference to the accompanying drawings.

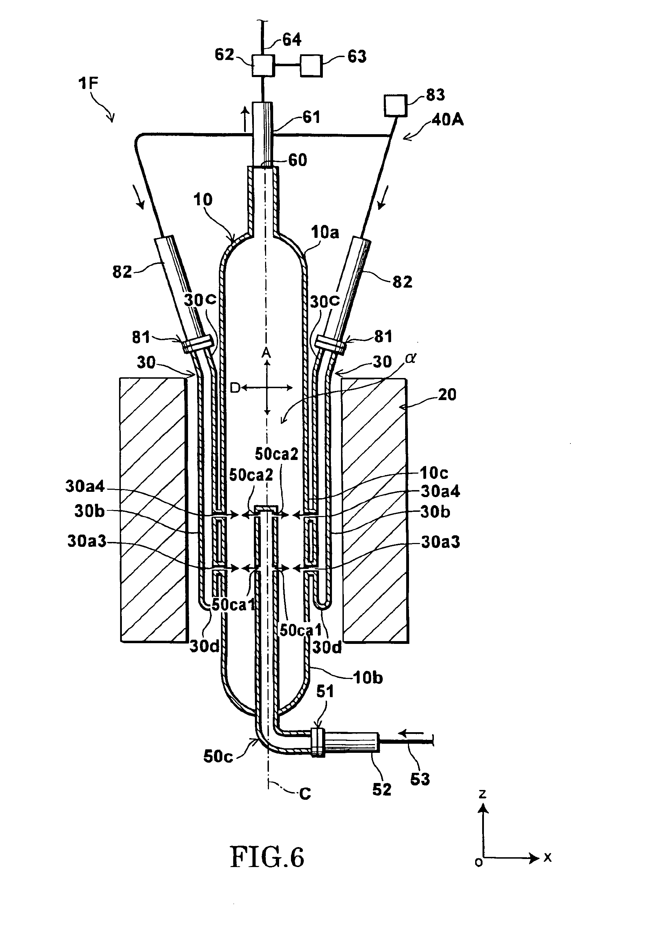

FIG 6 is a schematic cross-sectional view of the silicon manufacturing apparatus of the present embodiment.

The silicon manufacturing apparatus 1F of the present embodiment differs from the fifth embodiment in that the silicon compound supply pipe 50 is replaced by a silicon compound supply pipe 50c with remaining structures being identical to each other. Therefore, the present embodiment will be described below with a focus on such differing points and like or corresponding component parts bear like reference numerals to suitably simplify the description or to omit such a description.

More particularly, the silicon compound supply pipe 50c extends upward from the lower portion 10b of the reactor tube 10 to the heating region α, in which the silicon compound supply pipe 50c has both sides formed with a pair of silicon compound ejection ports 50cal facing in the radial direction D so as to eject a silicon compound in both directions along the radial direction D of the reactor tube 10. Also, the silicon compound supply pipe 50c has both sides formed with another pair of silicon compound ejection ports 50ca2 similar to the pair of silicon compound ejection ports social.

Further, the pairs of silicon compound ejection ports 50cal, 50ca2 and the connecting portions 30a3 and 30a4 are placed in opposition to each other with respect to the radial direction D of the reactor tube 10.

With the provision of such a structure, silicon powder with a large size can be manufactured with no need for the species crystalline of silicon to be separately fed. This reason will be described below.

The silicon compound, supplied from the pair of silicon compound ejection ports social, is reduced with zinc, supplied from the connecting portions 30a3, thereby producing silicon powder. This silicon powder moves upward in the reactor tube 10 to act as species crystalline in reduction reaction between the silicon compound, supplied from the pair of silicon compound ejection ports 50ca2, and zinc supplied from the connecting portions 30a4 placed in opposition to each other in the radial direction D.

Therefore, silicon powder with a large size can be manufactured with no need for the species crystalline of silicon to be separately fed, enabling the production of silicon powder at low cost.

With the present embodiment, although the silicon compound ejection ports 50cal and 50ca2 provided in pairs, more than two ejection ports may be provided on the reactor tube 10 in the radial direction D thereof under a situation where the reactor tube 10 has a large size in diameter. That is, three ejection ports may be provided on the reactor tube 10 each at, for instance, an interval of 120°. This enables the alleviation in unevenness in reaction gas distribution in the reactor tube.

Even with the present embodiment, further, the amount of silicon compound, supplied from the silicon compound ejection ports 50cal and 50ca2, and the total amount of zinc, supplied from the connecting portions 30a3 and 30a4, may preferably fall in a stoichiometrically equaled relationship or may be preferably adjusted so as to allow the amount of silicon compound to be slightly in excess.

### (Seventh Embodiment)

Next, a silicon manufacturing apparatus of a seventh embodiment according to the present invention will be described below in detail with reference to the accompanying drawings.

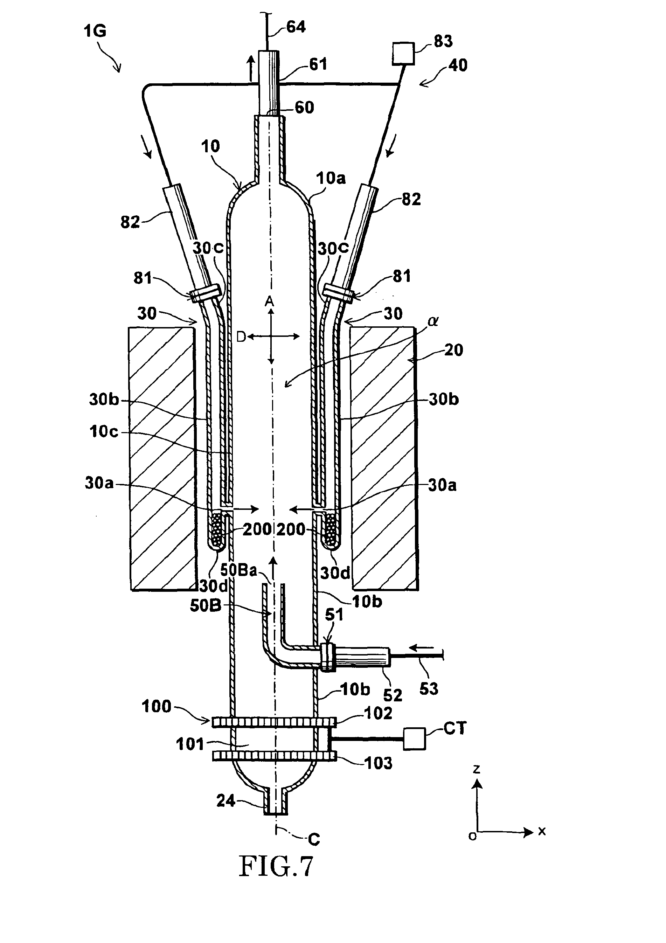

FIG 7 is a schematic cross-sectional view of the silicon manufacturing apparatus of the present embodiment.

The silicon manufacturing apparatus 1G of the present embodiment differs from the first embodiment in that the silicon reservoir 63 is replaced by a silicon powder accumulating mechanism 100 located below the lower portion 10b of the reactor 10 to which a silicon compound supply pipe 50B with remaining structures being identical to each other. Therefore, the present embodiment will be described below with a focus on such differing points and like or corresponding component parts bear like reference numerals to suitably simplify the description or to omit such a description.

More particularly, the silicon powder accumulating mechanism 100 is comprised of a load-lock structure having double gate valves 102 and 103. Even with the present embodiment, like the first embodiment, the species crystalline of silicon can be produced in the reactor tube 10 and grown up in particles with a large size. When this takes place, by adjusting the amount of raw materials to be supplied to the reactor tube 10 and flowing reactor gas through the reactor tube 10 at an optimized flow speed, silicon powder, grown up to the particles with a fixed size, can drop in the reactor tube 10. Therefore, silicon powder, produced and grown up in the reactor tube 10, drops to and accumulates in an accumulating compartment 101 between an upper gate valve 102 and a lower gate valve 103. Connected to the upper gate valve 102 and the lower gate valve 103 is a gate valve controller CT that controllably opens or closes these gate valves.

The gate valve controller CT is operative to allow the upper gate valve 102 to be maintained in an open state while permitting the lower gate vale 103 in a closed state during the production of silicon in the reactor tube 10 to produce silicon. With such an operation, product silicon powder free-falls to the accumulating compartment 101 provided on the lower gate valve 103 for storage. Upon making a detection with a sensor or making a visual confirmation to check a given amount of silicon powder accumulated on the lower gate valve 103, the upper gate valve 102 is brought into the closed state and the lower gate valve 103 is brought into the open state, thereby causing accumulated silicon powder to drop downward.

The silicon powder accumulating mechanism 100 has a lower area provided with a product silicon drain port 24, through which product silicon powder can be taken out of the reactor tube 10.

Here, a whole of gases, involving carrier gas, is caused to flow through the reactor tube 10 at a gas flow speed, which may be preferably adjusted by controlling the amount of input zinc, the amount of ejected silicon compound gas and the amount of carrier gas or the like to the extent in that product silicon powder drops and accumulates, i.e. the extent of, for instance, a flow speed of 2.5cm/sec. In addition, low temperature silicon tetrachloride gas (involving carrier gas), supplied from the silicon compound gas ejection port 50Ba, may preferably set to a gas flow speed higher than high temperature zinc gas (involving carrier gas) supplied from the zinc gas ejection port 30a.

By adjusting a condition under which gases are supplied to the reactor tube 10 in this way, it becomes easy to realize a temperature distribution such that the temperature of the area closer to the central axis C is lower than the temperature of another area closer to the side circumferential wall of the reactor tube 10. This also results in an effect of preventing zinc gas from remaining unreacted to escape to the outside of the reactor tube 10 and from being adhered to the inner wall of the exhaust pipe 61 remained at a low temperature.

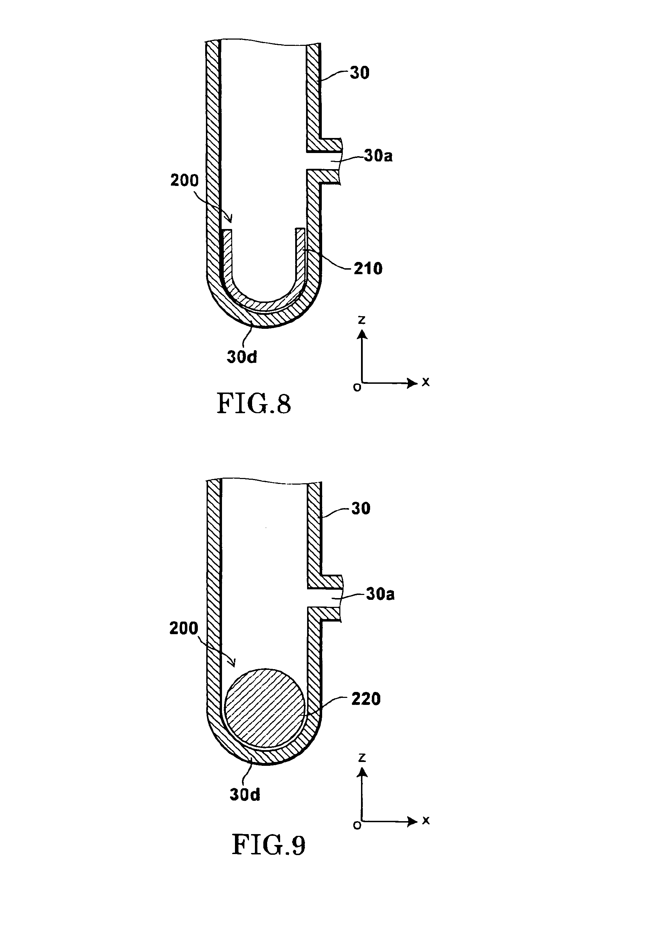

As shown in FIGS. 8 to 10, further, the extending portions 30d of the zinc gas supply pipes 30 may preferably have an inside formed with heat absorbing members 200 each made of granular single crystalline silicon or multicrystalline silicon. With such a structure, zinc, which is not gasified in the intermediate portions 30b of the zinc gas supply pipes 30, is exposed to the heat absorbing members 200, placed in the extending portions 30d of the zinc gas supply pipes 30, which accelerate the gasification of zinc.

FIGS. 8 to 10 are schematic cross-sectional views of respective extending portions 30d of the pair of the zinc gas supply pipes 30 of the silicon manufacturing apparatus 1G of the present embodiment.

As the amount of zinc, input from the zinc feeding mechanism 40A per unit time, increases, zinc is not adequately heated with a resultant probability of causing a difficulty of increasing the amount of zinc gas generation. As described with reference to the first embodiment, therefore, it may be preferably structured such that zinc, which is not gasified in the heating portions 30b, is temporarily accumulated in the extending portions 30d to be gasified with heat from the heating furnace 20.

However, in a case where the zinc supply pipes 30 are made of, for instance, insulating members made of quartz glass or the like, a probability takes place with the occurrence of a difficulty of adequately absorbing heat generated by the heating furnace 20. In addition to such a case, if the amount of input zinc per unit time increases, the provision of mere extending portions 30d results in likelihood in which the whole of zinc, input to the zinc supply pipes 30, cannot be evaporated.

To address such cases, the extending portions 30d may preferably have the insides provided with the heat absorbing members 200, respectively. In addition, the heat absorbing members 200 may be of the types that have surfaces preliminarily oxidized in silicon oxidized films (silicon dioxide).

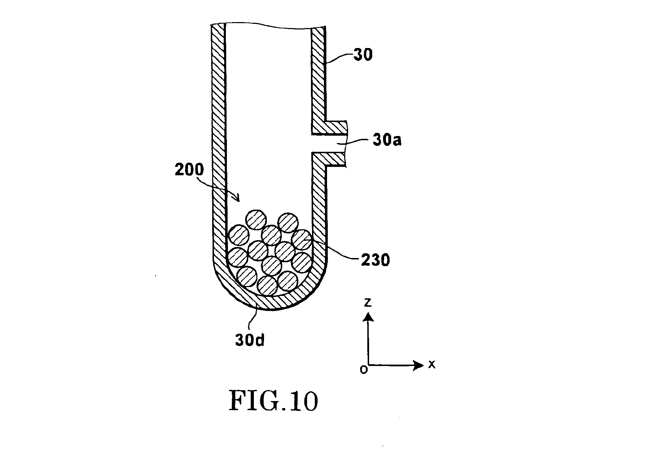

Examples of the heat absorbing members 200 may take a structure in the form of a crucible pot 210 having a concaved shape in cross section as shown in FIG 8, a spherical or elliptical body 220 as shown in FIG 9 or granular bodies 230 as shown in FIG 10.

Thus, with the heat absorbing members 200 placed inside the extending portions 30d, it becomes possible to reliably gasify zinc, unable to be gasified with the heating portions 30b of the zinc supply pipes 30 due to an increasing amount of input zinc per unit time, with the extending portions 30d, enabling an increase in the amount of zinc gas being generated.

With the silicon manufacturing apparatus of the present embodiment stated above, silicon, produced in the reactor tube 10, is caused to free-fall due to gravitational force of zinc and taken out of the reactor tube 10, thereby simplifying an apparatus configuration as a whole with no need for preparing the separator 62.

Further, since the two gate valves are provided and available to be suitably opened or closed, product silicon can be taken out of the reactor tube 10 during the production of silicon in the reactor tube 10 without causing the reactor tube 10 to be opened to the atmosphere.

Further, the heat absorbing members 200 are located in the extending portions 30d and zinc can be reliably gasified, enabling zinc to be gasified at an increased production rate.

### (Eighth Embodiment)

Next, a silicon manufacturing apparatus of an eighth embodiment according to the present invention will be described below in detail.

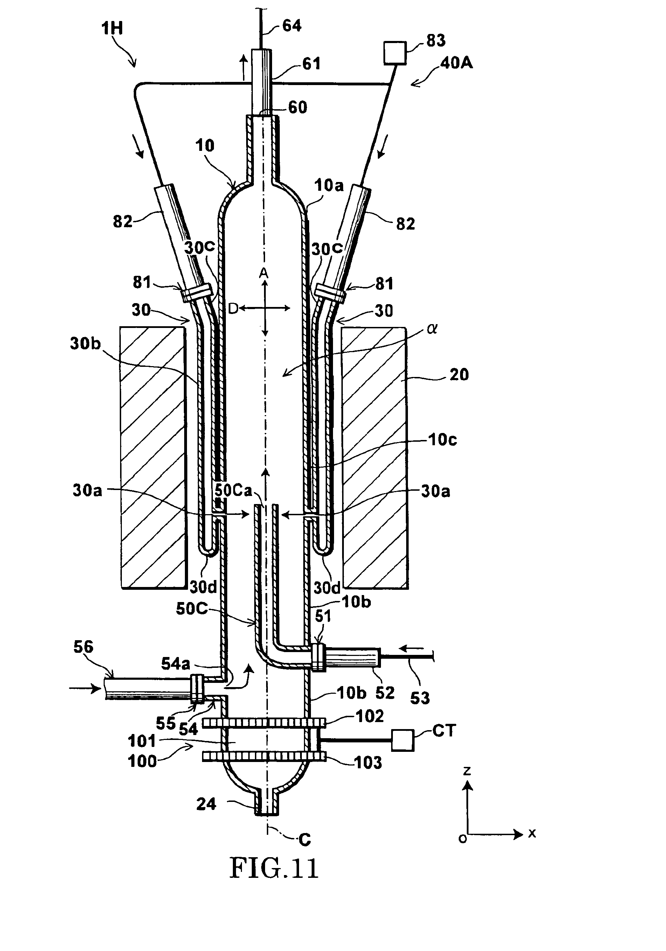

FIG 11 is a schematic cross-sectional view of the silicon manufacturing apparatus of the present embodiment.

The silicon manufacturing apparatus 1H of the present embodiment differs from the second embodiment in that the silicon reservoir 63 is replaced by a silicon powder accumulating mechanism 100 located below the lower portion 10b of the reactor 10 to which a silicon compound supply pipe 50C, having a silicon compound gas ejection port 50Ca, and a silicon compound supply pipe 54 are connected, with remaining structures being identical to each other. Therefore, the present embodiment will be described below with a focus on such differing points and like or corresponding component parts bear like reference numerals to suitably simplify the description or to omit such a description.

With the silicon manufacturing apparatus of the present embodiment stated above, like the seventh embodiment, silicon, produced in the reactor tube 10, is caused to free-fall due to a gravitational force of zinc and taken out of the reactor tube 10, thereby enabling an apparatus configuration to be simplified as a whole with no need for preparing the separator 62.

Further, since the two gate valves are provided to be suitably opened or closed, product silicon can be taken out of the reactor tube 10 during the production of silicon in the reactor tube 10 without causing the reactor tube 10 to be opened to the atmosphere.

### (Ninth Embodiment)

Next, a silicon manufacturing apparatus of a ninth embodiment according to the present invention will be described below in detail.

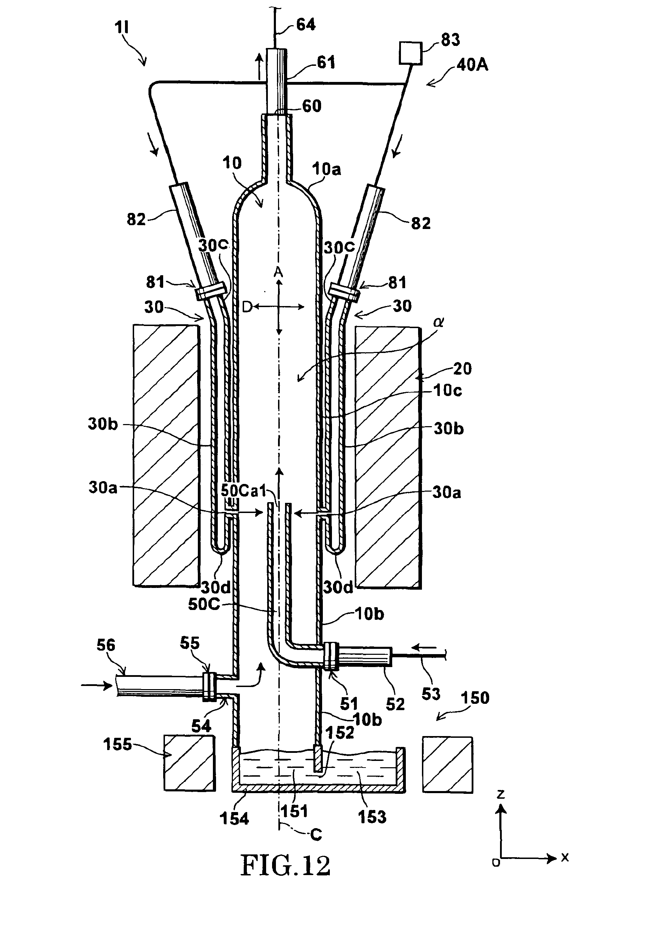

FIG 12 is a schematic cross-sectional view of the silicon manufacturing apparatus of the present embodiment.

The silicon manufacturing apparatus 11 of the present embodiment differs from the eighth embodiment in that the silicon powder accumulating mechanism 100 is replaced by a silicon powder accumulating and takeoff mechanism 150 with remaining structures being identical to each other. Therefore, the present embodiment will be described below with a focus on such differing points and like or corresponding component parts bear like reference numerals to suitably simplify the description or to omit such a description.

More particularly, the silicon powder accumulating and takeoff mechanism 150 includes a silicon powder takeoff member 154 comprised of an accumulating section 151 for accumulating silicon powder dropped from the reactor tube 10 by gravitational force, a heating section 155 for heating and melting accumulated silicon powder, a discharge hole 152 for discharging accumulated silicon to the outside of the reactor tube 10, and a holding section 153 temporarily holding melted silicon discharged through the discharge hole 152. With the silicon powder accumulating and takeoff mechanism 150, the heating section 155 surrounds the silicon powder takeoff member 154 for heating the same to heat and melt accumulated silicon powder.

With such a structure, first, silicon produced in the reactor tube 10 drops in the reactor tube 10 due to gravitational force into the accumulating section 151 of the silicon powder takeoff member 154, which is placed below the lower portion 10b of the reactor 10 to be heated with the heating section 155 to heat and melt silicon powder in an accumulated state. Next, product silicon, accumulated by a given amount, is extruded to be discharged through the discharge hole 152 to the holding section 153 due to gravitational force. Here, the silicon accumulating section 151 and the holding section 153 communicate with each other through the discharge hole 152 such that both of these two sections have melted silicon levels equal to each other. That is, with an increase in the amount of product silicon dropped in the accumulating section 151, the liquid level of the holding section 153 increases. Therefore, providing an overflow mechanism (not shown) in the holding section 153 enables product silicon to be automatically extruded to the outside of the reactor tube.

The silicon powder takeoff member 154 may be preferably formed of single crystalline silicon or multicrystalline silicon. In using such elements, further, silicon may preferably have a surface subjected to preliminary oxidation to be formed with a silicon dioxide film (silicon dioxide). With such a structure, the silicon powder takeoff member 154 can have an adequately endothermic effect to absorb heat of the heating portion 155 to allow product silicon to be efficiently kept in a melted condition.

With the silicon manufacturing apparatus of the present embodiment set forth above, the inside of the reactor tube 10 is shut off from the outside in the presence of melted silicon. Therefore, product silicon accumulated in the accumulating section 151 can be easily taken out of the reactor tube 10 without causing the same to be exposed to the outside.

### (Tenth Embodiment)

Next, a silicon manufacturing apparatus of a tenth embodiment according to the present invention will be described below in detail.

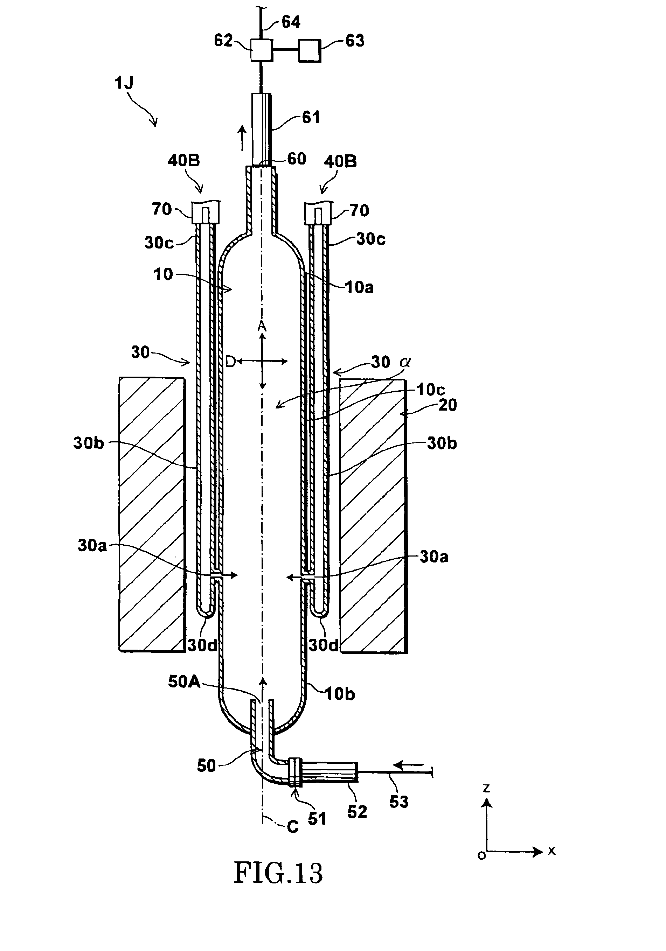

FIG 13 is a schematic cross-sectional view of the silicon manufacturing apparatus of the present embodiment.

The silicon manufacturing apparatus 1J of the present embodiment differs from the first embodiment in that the zinc feeding mechanism 40A is replaced by zinc feeding mechanisms 40B with remaining structures being identical to each other. Therefore, the present embodiment will be described below with a focus on such differing points and like or corresponding component parts bear like reference numerals to suitably simplify the description or to omit such a description.

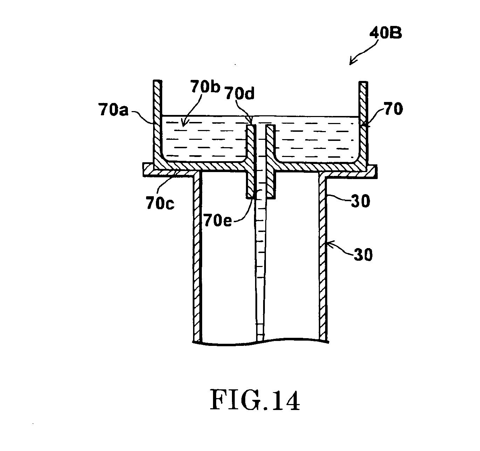

More particularly, as shown in FIGS. 13 and 14, the silicon feeding mechanisms 40B include zinc feeding members 70 adapted to be detachably mounted on the upper portions 30c of the pair of zinc supply pipes 30 each extending upward through a space between the reactor tube 10 and the heating furnace 20.

Each zinc feeding member 70 includes a liquid pool portion 70b having a concaved shape in cross section surrounded with a circumferential wall 70a, an upright portion 70d standing upright from a bottom portion 70c of the liquid pool portion 70b and having a height lower than that of the circumferential wall 70a, and a through-bore 70e extending from an upper side of the upright portion 70d to a lower side thereof so as to penetrate therethrough.

The liquid pool portion 70b serves as an area to which melted zinc is supplied from the outside and which temporarily stores the same. The upright portion 70d is a liquid pooling portion of an overflow type to permit the overflow of melted zinc supplied to the liquid pool portion 70d. Further, the through-bore 70e has a nozzle function to allow melted zinc, supplied to the liquid pool portion 70b and overflowing from the upright portion 70d, to flow into the zinc supply pipe 30.

That is, for zinc to be fed into the zinc supply pipe 30, melted zinc is supplied to the liquid pool portion 70b of the zinc feeding member 70 to cause melted zinc to pass across the upright portion 70d in an overflow system to be guided into the through-bore 70e to allow melted zinc to drop therethrough. With the provision of such a structure, it becomes possible to easily control the amount of zinc supplied to the zinc supply pipe 30.

Melted zinc is highly reactive with metals or ceramics. Thus, melted zinc has a tendency to be contaminated with impurities dissolved from the zinc feeding member 70 and the zinc feeding member 70 per se is corroded and damaged due to melted zinc. Thus, it is important to select material for use in the zinc feeding member 70. Therefore, the zinc feeding member 70 may be preferably made of a single crystalline silicon or multicrystalline silicon. When using such materials, preliminary oxidation may be preferably conducted on the material to form a silicon dioxide film (silicon dioxide) on a surface of silicon. The silicon member, subjected to such treatments, melted zinc is immune from contamination or the member per se is immune from corrosion. In addition, the zinc feeding member 70 may be made of quartz.

With such raw material being used, the zinc feeding member 70 is progressively heated due to radiation heats from the insides of the pair of zinc supply pipes 30. Thus, melted zinc can be kept under a melted condition without causing the solidification of melted zinc temporarily pooled in the liquid pool portion 70b. In addition, if the zinc feeding member 70 is inadequately heated due to some reasons such as lengths or placements of the zinc supply pipes 30, a heating mechanism (not shown) may be separately provided.

Here, the through-bore 70e of the zinc feeding member 70 may preferably have a bore diameter laying in an extent not to cause the clogging when causing melted zinc to drop into the zinc supply pipe 30. That is, the through-bore 70e may preferably have a bore diameter of 3mm or more. Although increasing the bore diameter allows the through-bore to be immune from the clogging, there is a risk causing the zinc supply pipe 30 to be incompletely heated. If there is a need for increasing the amount of zinc to be fed, in place of using a single through-bore with a large bore diameter as shown in FIG. 14, the zinc feeding member 70 may be preferably provided with a plurality of through-bores each with an optimum bore diameter to ensure the amount of zinc to be fed.

Further, zinc, supplied to the liquid pool portion 70b of the zinc feeding member 70, is not limited to melted zinc. Under a circumstance where the zinc feeding member 70 is made of single crystalline silicon, multicrystalline silicon or quartz, the zinc feeding member 70 is progressively heated with radiation heat from the zinc supply pipes 30. Thus, zinc in a solid (powdered) state may be fed into the liquid pool 70b.

With the silicon manufacturing method using the silicon manufacturing apparatus 1J of the present embodiment set forth above, melted zinc is supplied to the liquid pool portion 70b of the zinc feeding member 70 to cause melted zinc to flow over the upright portion 70d, after which melted zinc is caused to drop through the through-bore 70e into each zinc supply pipe 30. Here, the heating furnace 20 keeps the connecting portions 30a and the heating portions 30b of the zinc supply pipes 30 at high temperatures above 930°C representing a boiling point of zinc. Therefore, dropping melted zinc free-falls through the heating portions 30b due to gravitational force for gasification. Gasified zinc is ejected from the connecting portions 30a to be supplied into the reactor tube 10. The silicon compound is reduced with zinc in the reactor tube 10, producing fine powder-shape or needle-shape silicon and zinc chloride.

With the silicon manufacturing apparatus of the present embodiment set forth above, a whole apparatus can be simplified as a whole to provide controllability of a zinc supply rate and improving efficiency of reduction reaction for improving a yielding rate of silicon, while concurrently enabling improvements in efficiencies of separating and collecting product silicon and product gas.

### (Eleventh Embodiment)

Next, a silicon manufacturing apparatus of an eleventh embodiment according to the present invention will be described below in detail.

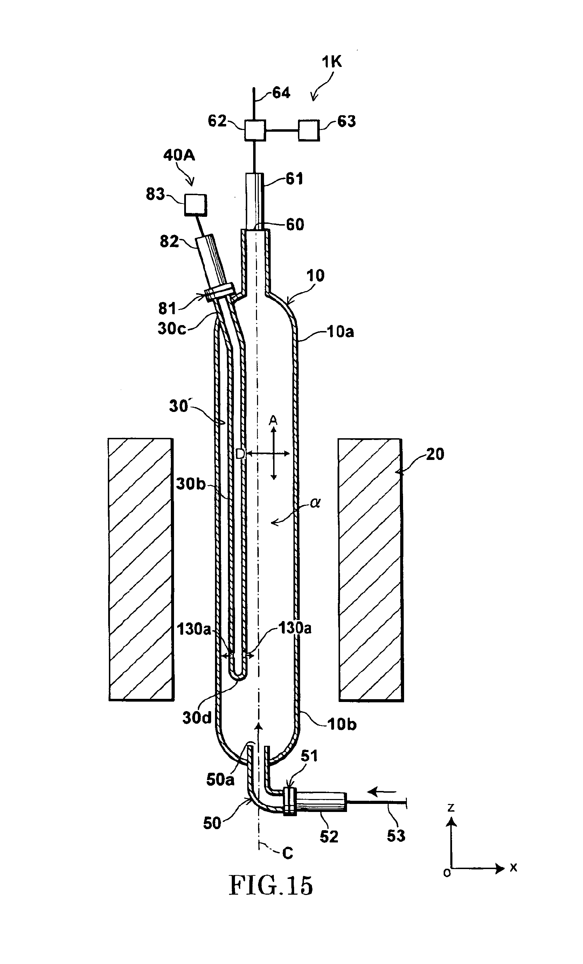

FIG 15 is a schematic cross-sectional view of the silicon manufacturing apparatus of the present embodiment.

The silicon manufacturing apparatus 1K of the present embodiment differs from the first embodiment in that the pair of zinc supply pipes 30 are replaced by one zinc supply pipe 30' penetrating through the reactor tube 10 with remaining structures being identical to each other. Therefore, the present embodiment will be described below with a focus on such differing points and like or corresponding component parts bear like reference numerals to suitably simplify the description or to omit such a description.

More particularly, the reactor tube 10 has an upper portion 10a at which the zinc supply pipe 30' extends into the reactor tube 10 at an area outside the heating region α. That is, the zinc supply pipe 30' penetrates into the reactor tube 10 at the upper portion 10a thereof so as to extend downward through the reactor tube 10 in an area closer to the circumferential wall of the central portion 10c than the central axis C.

The zinc supply pipe 30' includes zinc ejecting ports 130a functioning as zinc ejecting portions to eject zinc to the inside of the reactor tube 10, and a heating portion 30b placed in an area above the zinc ejecting ports 130a for heating zinc fed from the zinc feeding mechanism 40A. In addition, the zinc supply pipe 30' has an upper portion 30c placed in an area outside the reactor tube 10 is connected to the zinc feeding mechanism 40A. Here, the zinc ejecting ports 130a and the heating portion 30b are located in the reactor tube 10 and the heating region α that is heated with the heating furnace 20. The zinc supply pipe 30', made of quartz glass, has an inner diameter (width between inner sidewalls in the radial direction D in FIG 15) of, for instance, 200mm. In addition, the zinc ejection port 130a of the zinc supply pipe 30' has an opening diameter (a diameter along a direction A perpendicular the radial direction in FIG 15) of, for instance, 100mm. Also, with the embodiment described below, each zinc ejection port serves as a zinc ejecting portion.

Further, like the first embodiment, the zinc supply pipe 30' may preferably have an extending portion 30d extending downward from the heating portion 30 beyond the zinc ejection port 130a. The zinc supply pipe 30' may preferably have a plurality of zinc ejecting ports 130a (placed in two positions in FIG. 15) directed in a radial direction (the direction D in FIG. 15) of the reactor tube 10 as shown in FIG 15. With such a structure, zinc can be fed at a further increasing feeding rate.

With the silicon manufacturing method using the silicon manufacturing apparatus 1K of the present embodiment set forth above, zinc is caused to drop off from the zinc supply unit 83 due to gravitational force to be fed into the zinc feeding pipe 82. Zinc, fed in such a way, passes through the joint portion 81 into the zinc supply pipe 30' to reach the upper portion 30c of the zinc supply pipe 30'. When this takes place, the heating furnace 20 keeps the zinc ejection port 130a and the heating portion 30b of the zinc supply pipe 30' at high temperatures above 930°C representing the boiling point of zinc, thereby causing zinc, fed and free-falling through the heating portion 30b due to gravitational force, to be gasified. Gasified zinc is ejected from the zinc ejecting ports 130a to be supplied into the reactor tube 10. Then, the reactor tube 10 allows the silicon compound to be reduced with zinc, thereby yielding finer powder-shape or needle-shape silicon and zinc chloride.

With the silicon manufacturing apparatus of the present embodiment set forth above, a whole apparatus can be simplified to provide improved efficiency of reduction reaction for improving a rate of yielding silicon, while concurrently enabling improvements in efficiencies of separating and collecting product silicon and product gas.

Further, the zinc supply pipe 30' takes the form of a structure merely connected to the upper portion l0a of the reactor 10 in communication therewith, making it possible to easily perform the mounting or dismount of the relevant component parts for maintenances.

### (Twelfth Embodiment)

Next, a silicon manufacturing apparatus of twelfth embodiment according to the present invention will be described below in detail.

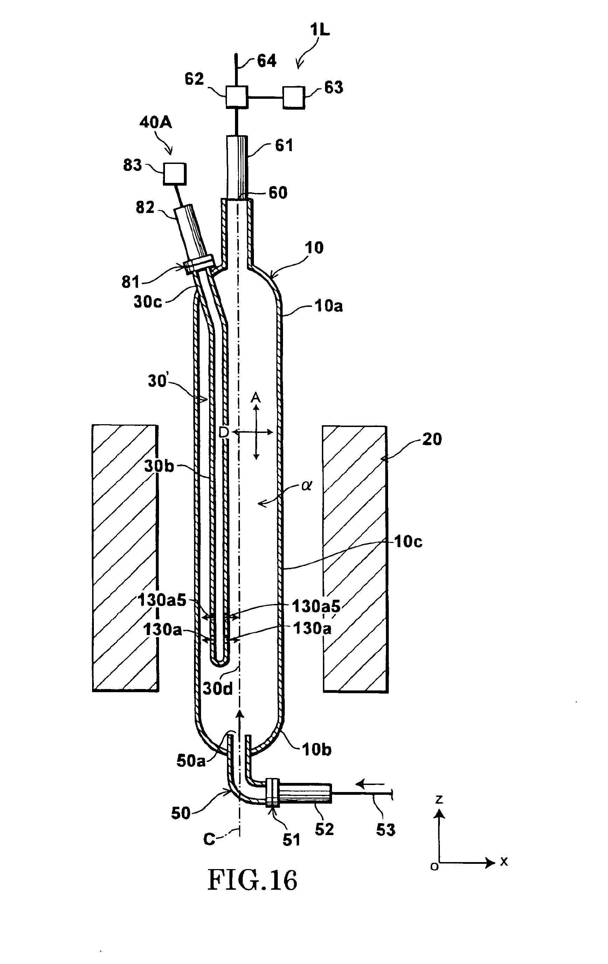

FIG 16 is a schematic cross-sectional view of the silicon manufacturing apparatus of the present embodiment.

The silicon manufacturing apparatus 1L of the present embodiment differs from the eleventh embodiment in that the zinc supply pipe 30' have the zinc ejecting ports 130a (with a pair of zinc ejecting ports 130a in FIG 16) formed at plural areas spaced in the radial direction D of the reactor tube 10 and, in addition, zinc ejecting ports 130a5 (with a pair of zinc ejecting ports 130a5 in FIG 16) formed in areas spaced in the axial direction A of the reactor tube 10 with remaining structures being identical to each other. Therefore, the present embodiment will be described below with a focus on such differing points and like or corresponding component parts bear like reference numerals to suitably simplify the description or to omit such a description.

With the provision of such a structure, silicon powder with a large size can be manufactured without separately feeding species crystalline of silicon. Such a reason will be described below.

The silicon compound, supplied from the silicon compound ejection port 50a, flows upward in the reactor tube 10 to be reduced with zinc supplied from the pair of zinc ejecting ports 130a on a first stage, thereby yielding silicon powder. In this moment, the amount of zinc, supplied from the pair of zinc ejecting ports 130a, is stoichiometrically adjusted to be less than the amount of silicon compound supplied from the silicon compound ejection port 50a. Therefore, silicon powder, produced here, is supplied from the silicon compound ejection port 50a, moves upward in the reactor tube 10 together with unreacted silicon compound unable to be reduced with zinc supplied from the pair of zinc ejecting ports 130a on the first stage. This allows silicon powder to act as species crystalline when reduction reaction occurs between zinc, supplied from the pair of zinc ejecting ports 130a5 on a second stage, and the unreacted silicon compound.

Therefore, silicon powder with a large size can be manufactured with no need for the species crystalline of silicon to be separately fed, enabling the production of silicon at low cost.

### (Thirteenth Embodiment)

Next, a silicon manufacturing apparatus of a thirteenth embodiment according to the present invention will be described below in detail.

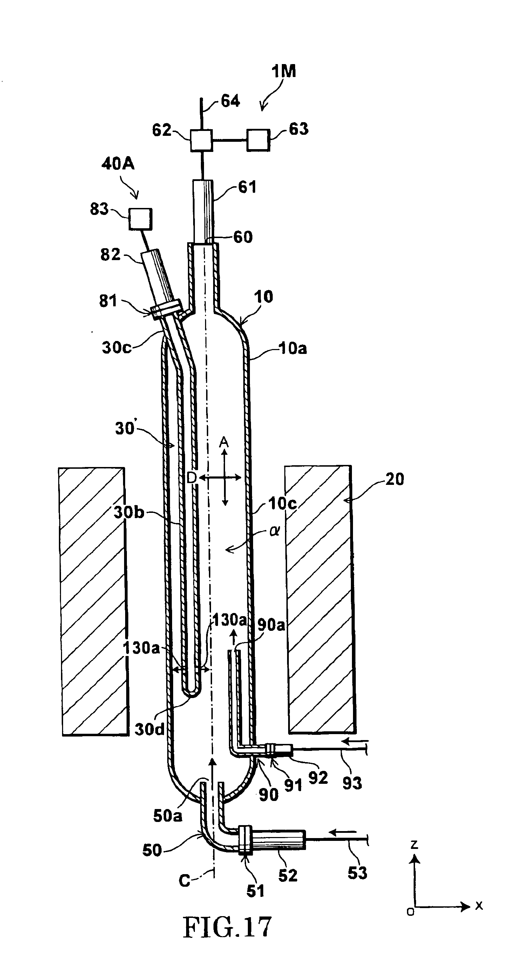

FIG 17 is a schematic cross-sectional view of the silicon manufacturing apparatus of the present embodiment.

The silicon manufacturing apparatus 1M of the present embodiment differs from the eleventh embodiment in respect of a further provision of a zinc compound supply pipe 90 made of quartz glass with remaining structures being identical to each other. Therefore, the present embodiment will be described below with a focus on such differing points and like or corresponding component parts bear like reference numerals to suitably simplify the description or to omit such a description.

More particularly, the zinc compound supply pipe 90 has a silicon compound ejection port 90a placed in an area above the zinc ejecting ports 130a of the zinc supply pipe 30' located in the reactor tube 10. The zinc compound supply pipe 90 communicates with a silicon gas guide pipe 92 and a silicon gas supply system 93 via a joint portion 91.

Here, the zinc ejecting ports 130a of the zinc supply pipe 30' and the silicon compound ejection ports 50a and 90a are sequentially placed in an upper direction in order of the silicon compound ejection port 50a, the pair of zinc ejecting ports 130a and the silicon compound ejection port 90a.

With the provision of such a structure, like the twelfth embodiment, silicon powder with a large size can be manufactured without separately feeding species crystalline of silicon. Such a reason will be described below.

The silicon compound, supplied from the silicon compound ejection port 50a, flows upward in the reactor tube 10 to be reduced with zinc supplied from the pair of zinc ejecting ports 130a of the zinc supply pipe 30', thereby yielding silicon powder. In this moment, the amount of zinc, supplied from the zinc ejecting ports 130a, is stoichiometrically adjusted to be greater in excess than the amount of silicon compound supplied from the silicon compound ejection port 50a. Therefore, silicon powder, produced here, moves upward in the reactor tube 10 together with unreacted silicon compound unable to be reduced with zinc supplied from the zinc ejecting ports 130a. This allows silicon powder to act as species crystalline when reduction reaction occurs between unreacted zinc and the silicon compound supplied from the silicon compound ejection port 90a.

Therefore, silicon powder with a large size can be manufactured with no need for the species crystalline of silicon to be separately fed, enabling the production of silicon at low cost.

Also, a total amount of silicon compounds, supplied from the silicon compound ejection ports 50a and 90a, and a total amount of zinc, supplied from the zinc ejecting ports 130a, may be stoichiometrically equaled to each other or the amount of silicon compounds may be preferably set to be slightly in excess. By so doing, it becomes possible to preclude zinc gas from escaping to the exhaust pipe 61 while preventing zinc from being adhered onto the pipe wall at low temperatures.

### (Fourteenth Embodiment)

Next, a silicon manufacturing apparatus of a fourteenth embodiment according to the present invention will be described below in detail.

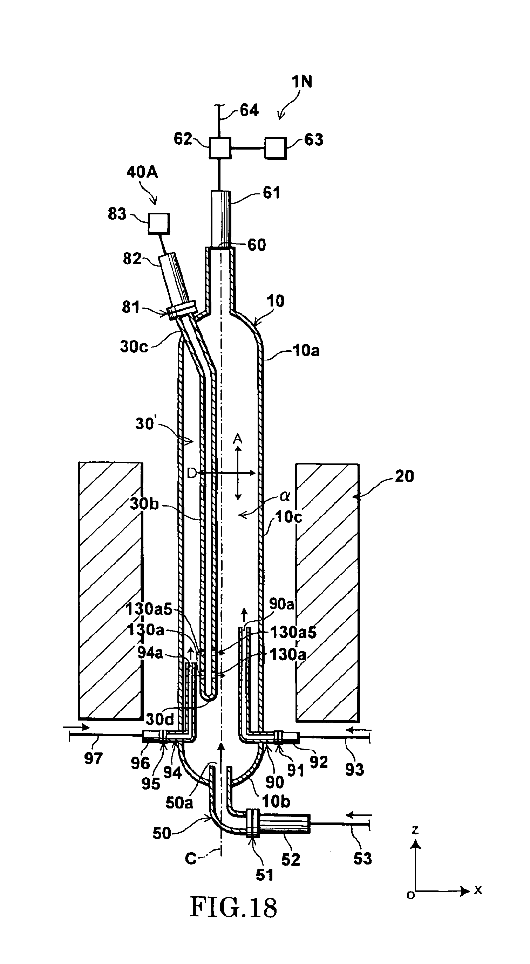

FIG 18 is a schematic cross-sectional view of the silicon manufacturing apparatus of the present embodiment.

The silicon manufacturing apparatus 1N of the present embodiment differs from the twelfth embodiment in respect of a further provision of zinc compound supply pipes 90 and 94 with remaining structures being identical to each other. Therefore, the present embodiment will be described below with a focus on such differing points and like or corresponding component parts bear like reference numerals to suitably simplify the description or to omit such a description.

More particularly, the zinc compound supply pipe 90 has the silicon compound ejection port 90a placed in the area above a pair of zinc ejecting ports 130a5 of one zinc supply pipe 30' located in the reactor tube 10 on a second stage. In addition, the zinc compound supply pipe 94 has a silicon compound ejection port 94a, placed in an area above a pair of zinc ejecting ports 130a of the zinc supply pipe 30' located in the reactor tube 10 on a first stage, which is located below the pair of zinc ejecting ports 130a5 on the second stage.

The zinc compound supply pipe 90 communicates with the silicon gas guide pipe 92 and the silicon gas supply system 93 via the joint portion 91. In addition, the zinc compound supply pipe 94 communicates with a silicon gas guide pipe 96 and a silicon gas supply system 97 via a joint portion 97.

Here, the zinc ejecting ports 130a and 130a5 of one zinc supply pipe 30' and the silicon compound ejection ports 50a, 90a and 94a are placed upward in sequence in the reactor tube 10 in order of the silicon compound ejection port 50a, the zinc ejecting ports 130a, the silicon compound ejection port 94a, the zinc ejecting ports 130a5 and the silicon compound ejection port 90a.

With the provision of such a structure, like the twelfth embodiment, silicon powder with a large size can be manufactured without separately feeding species crystalline of silicon. That is, steps of producing species crystalline of silicon described with reference to the twelfth embodiment may be conducted in multiple stages.

Therefore, silicon powder with a large size can be manufactured with no need for the species crystalline of silicon to be separately fed, enabling the production of silicon at low cost.

Also, a total amount of silicon compounds, supplied from the silicon compound ejection ports 50a, 90a and 94a, and a total amount of zinc, supplied from the zinc ejecting ports 130a and 130a5, may be stoichiometrically equaled to each other or the amount of silicon compounds may be preferably adjusted to be slightly in excess. By so doing, it becomes possible to preclude zinc gas from escaping to the exhaust pipe 61 while preventing zinc from being adhered onto the pipe wall at low temperatures.

### (Fifteenth Embodiment)

Next, a silicon manufacturing apparatus of a fifteenth embodiment according to the present invention will be described below in detail.

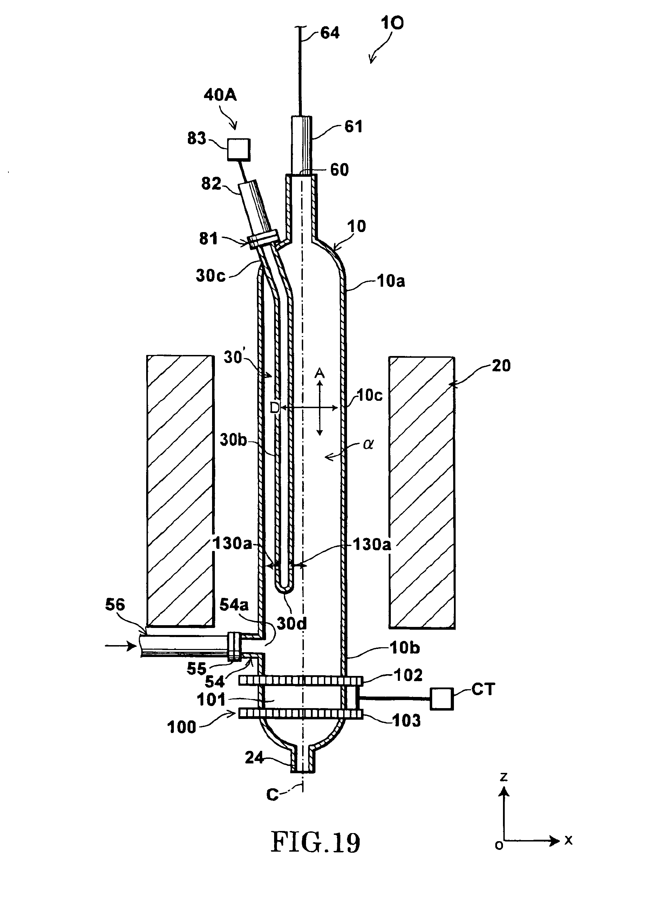

FIG 19 is a schematic cross-sectional view of the silicon manufacturing apparatus of the present embodiment.

The silicon manufacturing apparatus 10 of the present embodiment differs from the eleventh embodiment in that the silicon compound supply pipe 50 is replaced by the silicon compound supply pipe 54 and, in addition, the separator 62 and the silicon reservoir 63 are replaced by the silicon powder accumulating mechanism 100 located below the lower portion 10b of the reactor tube 10 with remaining structures being identical to each other. The silicon compound supply pipe 54 has the same structure as that of the second embodiment and the silicon powder accumulating mechanism 100 has the same structure as that of the seventh embodiment. Therefore, the present embodiment will be described below with a focus on such differing points and like or corresponding component parts bear like reference numerals to suitably simplify the description or to omit such a description. Also, the silicon compound supply pipe 54 has a function equivalent to the function of the silicon compound supply pipe 50 of the eleventh embodiment.

With the silicon manufacturing apparatus of the present embodiment, like the seventh embodiment, silicon, produced in the reactor tube 10, free-falls due to a gravitational force to be extracted from the reactor tube 10. Thus, an apparatus configuration can be simplified as a whole with no need for providing the separator 62.

Further, with the two gate valve being provided to be suitably opened or closed, product silicon can be taken out of the reactor tube 10 without causing the reactor tube 10 to be exposed to the atmosphere even during the production of silicon in the reactor tube 10.

### (Sixteenth Embodiment)

Next, a silicon manufacturing apparatus of a sixteenth embodiment according to the present invention will be described below in detail.

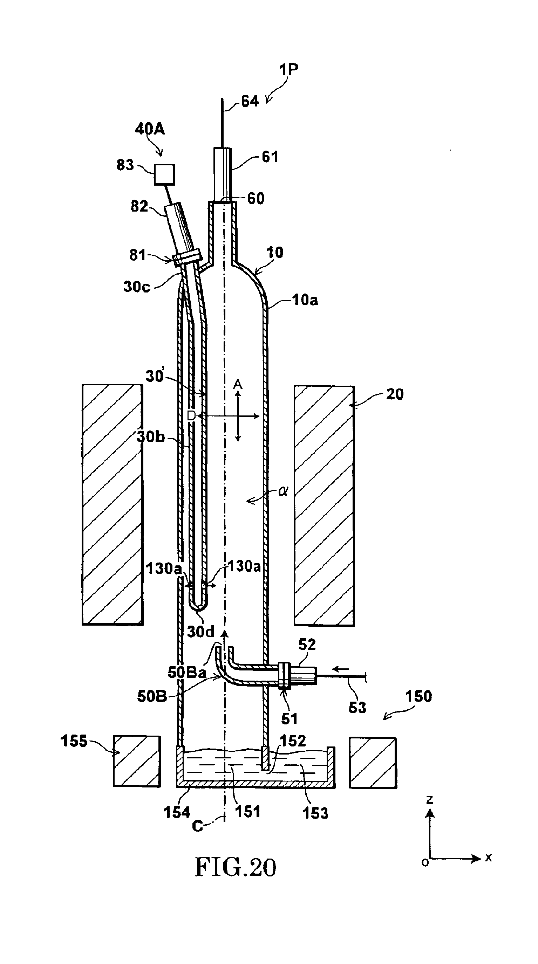

FIG 20 is a schematic cross-sectional view of the silicon manufacturing apparatus of the present embodiment.

The silicon manufacturing apparatus 1P of the present embodiment differs from the fifteenth embodiment in that the silicon compound supply pipe 54 is replaced by a silicon compound supply pipe 50B and, in addition, the silicon powder accumulating mechanism 100 is replaced by a silicon powder accumulating and takeoff mechanism 150. The silicon compound supply pipe 50B has the same structure as that of the seventh embodiment and the silicon powder accumulating and takeoff mechanism 150 has the same structure as that of the ninth embodiment. Therefore, the present embodiment will be described below with a focus on such differing points and like or corresponding component parts bear like reference numerals to suitably simplify the description or to omit such a description. Also, the silicon compound supply pipe 50B of the present embodiment has a function equivalent to the function of the silicon compound supply pipe 50 of the eleventh embodiment.

With the silicon manufacturing apparatus of the present embodiment, like the ninth embodiment, the inside of the reactor tube 10 is shut off from the atmosphere by means of melted silicon. This enables product silicon, accumulated in the accumulating section 151, to be easily taken out without causing the inside of the reactor tube 10 to be exposed to the atmosphere.

### (Seventeenth Embodiment)

Next, a silicon manufacturing apparatus of a seventeenth embodiment according to the present invention will be described below in detail.

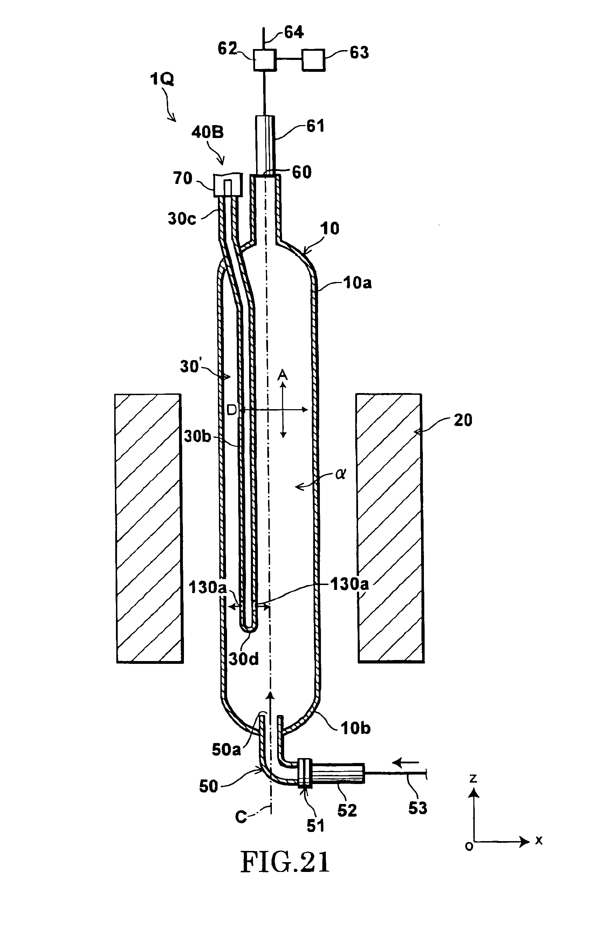

FIG 21 is a schematic cross-sectional view of the silicon manufacturing apparatus of the present embodiment.

The silicon manufacturing apparatus 1Q of the present embodiment differs from the eleventh embodiment in that the zinc feeding mechanism 40A is replaced by a zinc feeding mechanism 40B with remaining structures being identical to each other. The zinc feeding mechanism 40B has the same structure as that of the tenth embodiment. Therefore, the present embodiment will be described below with a focus on such differing points and like or corresponding component parts bear like reference numerals to suitably simplify the description or to omit such a description.

With the silicon manufacturing apparatus of the present embodiment, like the tenth embodiment, it becomes possible to easily control the amount of zinc to be supplied to the zinc supply pipe 30'.

### (Eighteenth Embodiment)

Next, a silicon manufacturing apparatus of an eighteenth embodiment according to the present invention will be described below in detail.

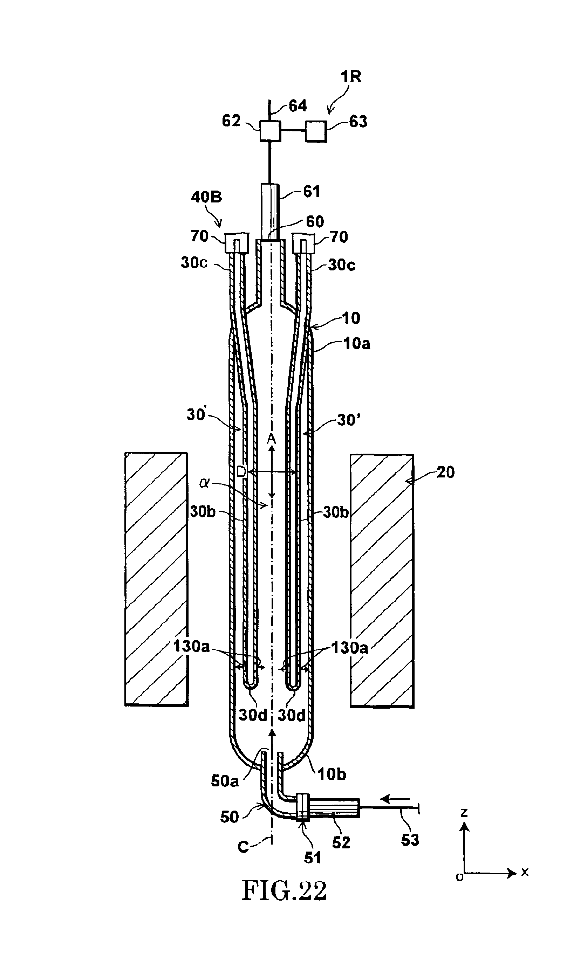

FIG 22 is a schematic cross-sectional view of the silicon manufacturing apparatus of the present embodiment.

The silicon manufacturing apparatus 1R of the present embodiment differs from the seventeenth embodiment in that a plurality of zinc supply pipe 30' are provided with remaining structures being identical to each other. Therefore, the present embodiment will be described below with a focus on such differing points and like or corresponding component parts bear like reference numerals to suitably simplify the description or to omit such a description.

As shown in FIG 22, the plurality of zinc supply pipes 30' are located in the radial direction D of the reactor tube 10 (with two pieces in FIG 22) and each of the zinc supply pipes 30' has a pair of zinc ejecting ports, which are placed in positions to eject zinc in the radial direction D of the reactor tube 10. In addition, each of the zinc supply pipes 30' is placed in the reactor tube 10 at an area closer to the circumferential wall of the central portion 10c than a central axis C.

Further, in order to adjust a gas flow inside the reactor tube 10, the pipes may be preferably further extended and provided with a plurality of zinc ejecting ports 130a in areas along a vertical direction or a circumferential direction.

The silicon manufacturing apparatus of the present embodiment is able to feed zinc to the reactor tube 10 at a further increased feeding rate.

### (Nineteenth Embodiment)

Next, a silicon manufacturing apparatus of a nineteenth embodiment according to the present invention will be described below in detail.

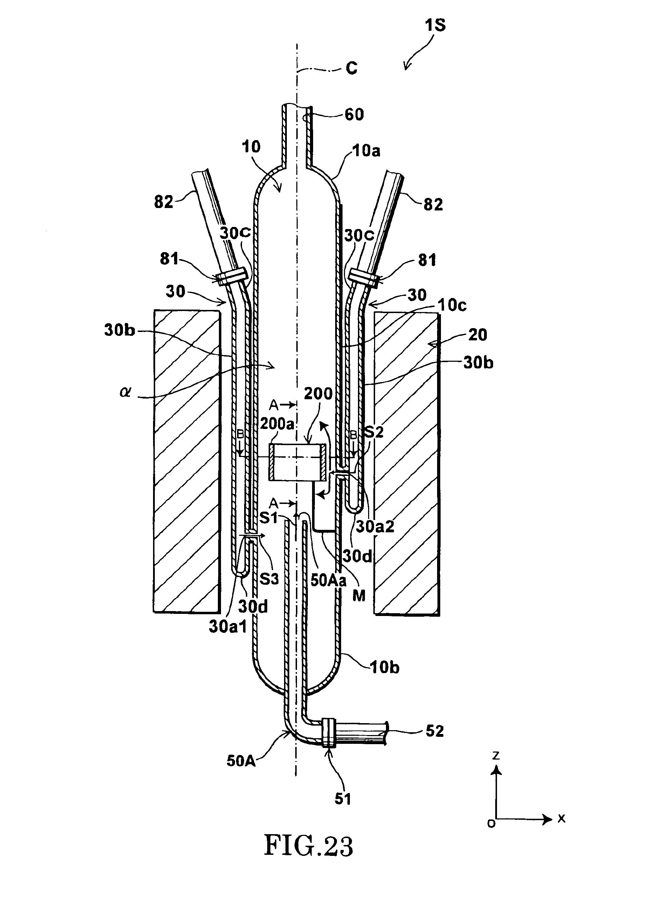

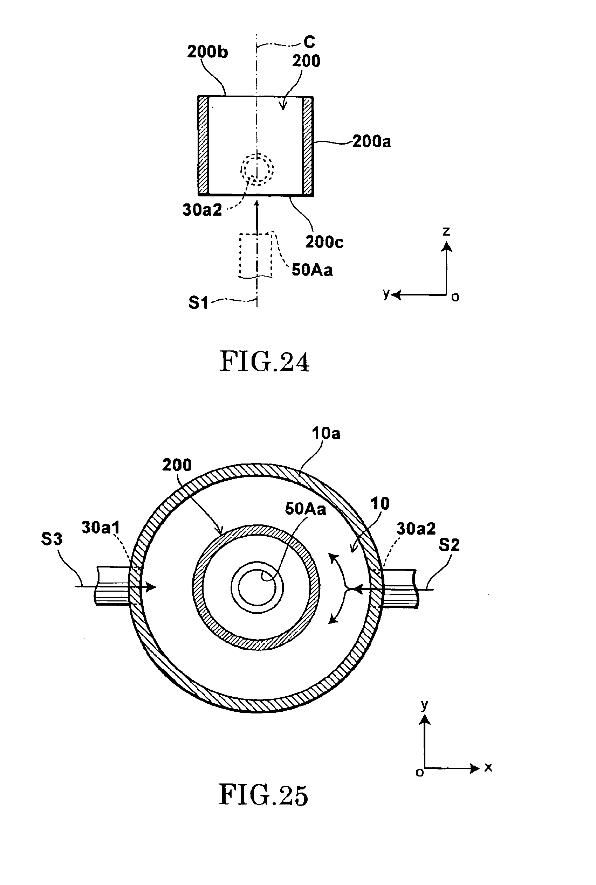

FIG 23 is a schematic cross-sectional view of the silicon manufacturing apparatus of the present embodiment. FIG 24 is an enlarged cross-sectional view taken on line A-A of FIG 23 and FIG 25 is an enlarged cross-sectional view taken on line B-B of FIG 23.

The silicon manufacturing apparatus 1 S of the present embodiment differs from the silicon manufacturing apparatus 1C of the third embodiment in that a straightening member 200 (first straightening member) is provided with remaining other structures being identical to each other. Therefore, the present embodiment will be described below with a focus on such differing points and like or corresponding component parts bear like reference numerals to suitably simplify the description or to omit such a description.

As shown in FIG 23, the silicon manufacturing apparatus 1S of the present embodiment includes the straightening member 200 located in the reactor tube 10.

More particularly, the straightening member 200 is comprised of a annular cylindrical member, made of quartz or ceramic, which is disposed in the reactor tube 10 in concentric relation with the central axis C and has a circumferential wall 200a surrounding such an axis. The straightening member 200 is supported on the central portion 10c of the reactor tube 10 by means of a support member M.

Further, a coaxial relationship is not strictly required between a central axis of the straightening member 200 and the central axis C of the reactor tube 10. That is, the central axis of the straightening member 200 has no need to be necessarily provided in a coaxial relationship with and the central axis C of the reactor tube 10, provided that an arrangement allows silicon compound gas to flow through an internal area surrounded with the circumferential wall 200a to move from a lower side to an upper side in the central portion 10c at a given flow speed while enabling zinc gas to be deflected with the circumferential wall 200a. For instance, it doesn't matter if the straightening member 200 is placed in an area deviated from the central axis C in parallel thereto.

The pair of zinc supply pipes 30, placed in an axial symmetry with respect to the central axis C of the reactor tube 10, has zinc ejecting ports, located in correspondence to the connecting portions 30a1 and 30a2, which communicate with the central portion 10c of the reactor tube 10 in the axial symmetry with respect to the central axis C. In addition, for the sake of convenience in description, hereunder, the pair of connecting portions 30al and 30a2 has through-holes that bear reference numerals 30al and 30a2 and such a pair of through-holes will be described as zinc ejecting ports 30al and 30a2.

The zinc ejection port 30a1 (second zinc ejection port) is located on the circumferential wall of the central portion 10c at an area below the silicon compound ejection port 50Aa and the zinc ejection port 30a2 (first zinc ejection port) is located on the circumferential wall of the central portion 10c at an area above the silicon compound ejection port 50Aa. In addition, the zinc ejection port 30al ejects zinc gas along a zinc ejecting direction S3 (in a third ejecting direction) perpendicular to the central axis C and the zinc ejection port 30a2 ejects zinc gas along a zinc ejecting direction S2 (in a second ejecting direction) in opposition to the zinc ejecting direction S3.

Further, although the two zinc supply pipes, each having one zinc ejection port, are disposed in different axial positions in axial symmetry, layouts and the number of pieces to be provided are not limited provided that an adequate amount of zinc gas can be ensured. For instance, it doesn't matter if one zinc supply pipe has a plurality of zinc ejecting ports and a plurality of zinc ejecting ports may be located in areas with an appropriate distance in the same axial position. Moreover, the zinc ejecting directions S2 and S3, related to zinc gas, typically have the relationship perpendicular to the silicon compound ejecting direction S1 (first ejecting direction) oriented in a direction in which the silicon compound ejection port 50Aa of the silicon compound supply pipe 50A ejects silicon compound gas from a lower side to an upper side. However, the present invention is not limited to such a relationship and the zinc ejecting directions S2 and S3 may be oriented in the silicon compound ejecting direction S1 to lie in a direction directed from a lower side to an upper side.

Now, detailed description is made of a positional relationship among the straightening member 200, the silicon compound supply pipe 50A and the pair of zinc supply pipes 30, and flows of silicon compound gas and zinc gas.

As shown in FIGS. 24 and 25 in detailed structures, the straightening member 200 and the silicon compound supply pipe 50A stand in the positional relationship. That is, the silicon compound supply pipe 50A has the silicon compound ejection port 50Aa placed in an area below the straightening member 200 so as to face the internal area surrounded with the circumferential wall 200a of the straightening member 200.

Here, the straightening member 200 and the silicon compound supply pipe 50A are coaxially placed with the central axis C of the reactor tube 10. This allows silicon compound gas to be ejected into the central portion 10c of the reactor tube 10 from the lower side to the upper side in the silicon compound ejecting direction S1 under a given ejecting pressure. Then, silicon compound gas flows across the central portion 10c and exhausted from the exhaust port 60. Therefore, ejected silicon compound gas mainly passes through the internal area surrounded with the circumferential wall 200a of the straitening member 200 to flow from the lower side to the upper side in a given flow distribution.

Further, due to a flow of silicon compound gas ejected in such a way to flow from the lower side to the upper side, a pressure gradient occurs in the reactor tube 10 with a pressure decreasing from the lower side to the upper side. In response to such a status, a pressure gradient occurs in an area between the circumferential wall 200a and the central portion 10c facing thereto and in a related downstream area with a pressure dropping from a lower side to an upper side.

As shown in FIGS. 24 and 25 in detailed structures, the straightening member 200 and the zinc ejection port 30a2 has a positional relationship under which the zinc ejection port 30a2 is placed in face-to-face relation to the circumferential wall 200a of the straightening member 200. In addition, the zinc ejection port 30a2 is placed on the circumferential wall 200a at a position loser to a lower end 200c than an upper end 200b of the circumferential wall 200a.

With such a structure, zinc gas is ejected under a given ejecting pressure from the zinc ejecting port 30a2 to the central portion 10c of the reactor tube 10 along the zinc ejecting direction S2. Thus, ejected zinc gas is deflected at the circumferential wall 200a without substantially causing an adverse effect on the flow speed distribution of silicon compound gas flowing through the internal region, surrounded with the circumferential wall 200a of the straightening member 200, at a given flow speed in a direction from the lower side to the upper side thereof.

In a cross-sectional view of FIG 23, more particularly, ejected zinc gas is deflected downward and upward at the circumferential wall 200a and, in a cross-sectional view of FIG 25, deflected clockwise and counterclockwise so as to surround the circumferential wall 200a about the central axis C. Here, the zinc ejecting port 30a2 is placed in a position closer to the lower end 200c with respect to the circumferential wall 200a. Thus, ejected zinc gas is subjected to a pressure under a pressure gradient with a pressure varying from the lower side to the upper side in the region between the circumferential wall 200a and the central portion 10c associated therewith and the related downstream area, thereby forming a main stream directed from the lower side to the upper side.

Zinc gas, oriented from the lower side to the upper side in such a way, passes through the internal region surrounded with the circumferential wall 200a of the straightening member 200 merges into a flow of silicon compound gas, flowing from the lower side to the upper side at a given flow speed, mainly at an upper space of the straitening member 200.

As shown in FIGS. 24 and 25 in detail, the straightening member 200 and the zinc ejecting port 30a1 has a positional relationship under which the zinc ejecting port 30a1 is placed in opposition to the silicon compound supply pipe 50A. Here, the zinc ejecting port 30a1 ejects zinc gas in the zinc ejecting direction S3 to the inside of the central portion 10c of the reactor tube 10 at a given ejecting pressure. Ejected zinc gas is subjected to a pressure under the pressure gradient with the pressure decreasing from the lower side to the upper side due to the flow of silicon compound gas ejected from the silicon compound ejecting port 50Aa to flow from the lower side to the upper side, thereby forming a flow directed from the lower side to the upper side.

Then, zinc gas, directed from the lower side to the upper side, converges with silicon compound gas ejected from the silicon compound ejecting port 50Aa to flow to the upper side through the internal region surrounded with the circumferential wall 200a of the straightening member 200. Thus, the resulting mixture flows upward through the internal region surrounded with the circumferential wall 200a of the straightening member 200 to converge with zinc gas ejected from the zinc ejecting port 30a2 to mainly flow through the space between the circumferential wall 200a and the opposing central portion 10c.

Therefore, silicon compound gas and zinc gas, sequentially converged in such a way, are diffusely mixed to each other at the upper space of the straitening member 200. This results in the occurrence of reduction reaction to yield silicon powder, forming an aggregate of silicon particles, and zinc chloride, which flow toward the exhaust port 60 above the reactor tube 10. Resulting silicon particles and zinc chloride are subjected to an exhausting pressure due to the pressure inside the reactor tube 10 and exhausted from the exhaust port 60 to the outside of the reactor 10. In addition, silicon powder and zinc chloride, exhausted from the exhaust port 60, are separated from each other, resulting in an effect of selectively collecting silicon.

Next, a method of manufacturing silicon using the silicon manufacturing apparatus 1S of the present embodiment of the structure set forth above will be described below in detail.

First, the heating furnace 20 heats zinc in the heating portions 30b at temperatures above the boiling point for gasification, thereby forming gasified zinc gas. Resulting zinc gas is ejected from the zinc ejecting port 30a2 in the zinc ejecting direction S2 laying in a direction perpendicular to the central axis C of the reactor tube 10 and from the zinc ejecting port 30a1 in the zinc ejecting direction S3 laying in a direction perpendicular to the central axis C of the reactor tube 10, causing resulting zinc gas to be ejected to the central portion 10c of the reactor tube 10 at given ejecting pressure.

Simultaneously, the silicon compound ejecting port 50Aa ejects silicon compound gas upward from the lower side of the central portion 10c of the reactor tube 10 along a silicon compound ejecting direction S1 in line with the central axis C. Thus, ejected silicon compound gas flows upward from the lower side in the central portion 10c in a given flow speed distribution through the internal region surrounded with the circumferential wall 200a of the straightening members 200,while causing a pressure gradient to occur in the reactor tube 10 with a pressure decreasing from the lower side to the upper side and incidentally causing another pressure gradient to occur in a space between the circumferential wall 200a and the opposing central portion 10c opposed thereto and in the downstream region thereof with a pressure decreasing from the lower side to the upper side.

Here, zinc gas, ejected from the zinc ejecting port 30al of the lower side to the inside of the central portion 10c of the reactor tube 10, flows in a stream oriented from the lower side to the upper side due to the pressure gradient caused in the central portion 10c from the lower side to the upper side therein. Then, zinc gas directed from the lower side to the upper side converges with silicon compound gas ejected from the silicon compound ejection port 50Aa, after which resulting stream flows upward mainly through the internal region surrounded with the circumferential wall 200a of the straightening member 200.

Further, zinc gas, ejected from the zinc ejecting port 30a2 at the upper side to the inside of the central portion 10c of the reactor tube 10, flows around the circumferential wall 200a about the z-axis without substantially affecting the flow speed distribution of silicon compound gas flowing through the internal region, surrounded with the circumferential wall 200a of the straightening member 200, from the lower side to the upper side thereof at the given flow speed. In this moment, zinc gas is subjected to the pressure under the pressure gradient directed from the lower side to the upper side in the space between the circumferential wall 200a and the central portion 10c placed in opposition thereto, thereby mainly forming a stream directed from the lower side to the upper side to be deflected at the circumferential wall 200a.

Thus, silicon compound gas, flowing through the internal region surrounded with the circumferential wall 200a of the straightening member 200 from the lower side to the upper side thereof at the given flow speed, zinc gas flowing from the lower side to the upper side in the space between the circumferential wall 200a and the central portion 10c placed in opposition thereto, and zinc gas, flowing from the lower side to the upper side through the internal region surrounded with the circumferential wall 200a of the straightening member 200, converge with each other in the straitening member 200 at the upper side thereof to be diffusely mixed to each other in reduction reaction. This results in the production of silicon powder and zinc chloride, which flow to the exhaust port 60 of the reactor tube 10 placed at the upper side.

Silicon powder and zinc chloride, produced in such a way, is subjected to an exhaust pressure due to the pressure inside the reactor tube 10 and exhausted from the exhaust port 60 to the outside of the central portion 10c, after which silicon powder and zinc chloride are separated from each other, enabling silicon to be selectively collected and obtained.

With the structure set forth above, a simplified structure is employed with the provision of the straitening member 200 disposed in the reactor tube 10 to allow zinc gas, ejected from the zinc ejecting port 30a2 in the zinc ejecting direction S2, to be deflected while permitting silicon compound gas, ejected from the silicon compound ejection port 50Aa in the zinc ejecting direction S1, to flow from the lower side to the upper side in the reactor tube 10. With such a simplified structure, zinc gas is enabled to flow through the reactor tube 10 without causing any unnecessary adverse affect on the flow of silicon compound gas that substantially defines the flow speed of the gas stream in the reactor tube 10. This prevents an apparatus configuration from being complicated with a resultant improved effect of reduction reaction for improving the yielding rate of silicon, while improving the rate of concurrently separating and collecting product silicon and product gas.

Further, with the straightening member 200 comprised of the annular cylindrical member having the circumferential wall 200a disposed in the tubular cylindrical member of the reactor tube 10, zinc gas, ejected from the first zinc ejecting port 30a2 in the second zinc ejecting direction S2, can be deflected. In addition, silicon compound gas, ejected from the silicon compound ejection port 50Aa in the zinc ejecting direction S1, is permitted to flow from the lower side to the upper side in the reactor tube 10. More particularly, by forming the straightening member 200 of the annular cylindrical member, a gas flow can be realized in a simplified structure.

Further, with the silicon compound ejection port 50Aa placed in the area to face the region surrounded the circumferential wall 200a of the straightening member 200, silicon compound gas can be caused to reliably pass mainly through the region surrounded the circumferential wall 200a of the straightening member 200.

Further, with the first zinc ejecting port 30a2 placed in opposition to the circumferential wall 200a of the straightening member 200, the flow of zinc gas can be reliably deflected. More particularly, with the first zinc ejecting port 30a2 placed in opposition to the lower area of the circumferential wall 200a of the straightening member 200, the flow of deflected zinc gas is subjected to the pressure due to the pressure gradient caused in the vicinity of the circumferential wall 200a. This allows zinc gas to reliably flow from the lower side to the upper side, enabling zinc gas to converge with the flow of silicon compound gas.

Further, the zinc supply pipe 30 has the second zinc ejecting port 30a1, placed in the reactor tube 10 at the area lower than the first zinc ejecting port 30a2, which is placed in the area lower than the silicon compound ejection port 50Aa. This enables zinc gas, ejected from the second zinc ejecting port 30a1, to flow to be rapidly supplied to the reactor tube 10 from the lower side to the upper side therein at an adequate supply rate without causing any unnecessary affect on the flow of silicon compound gas.

### (Twentieth Embodiment)

Next, a silicon manufacturing apparatus of a twentieth embodiment according to the present invention will be described below in detail.

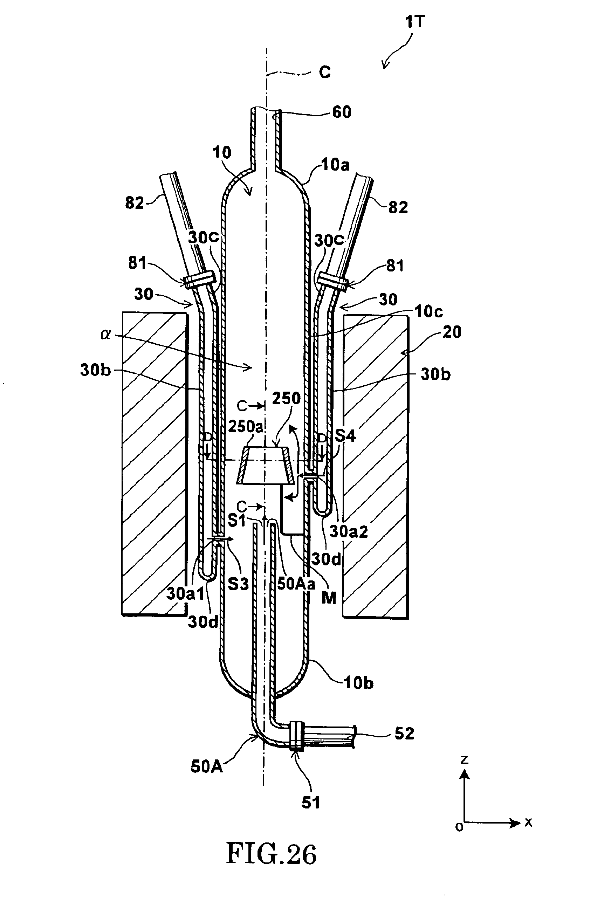

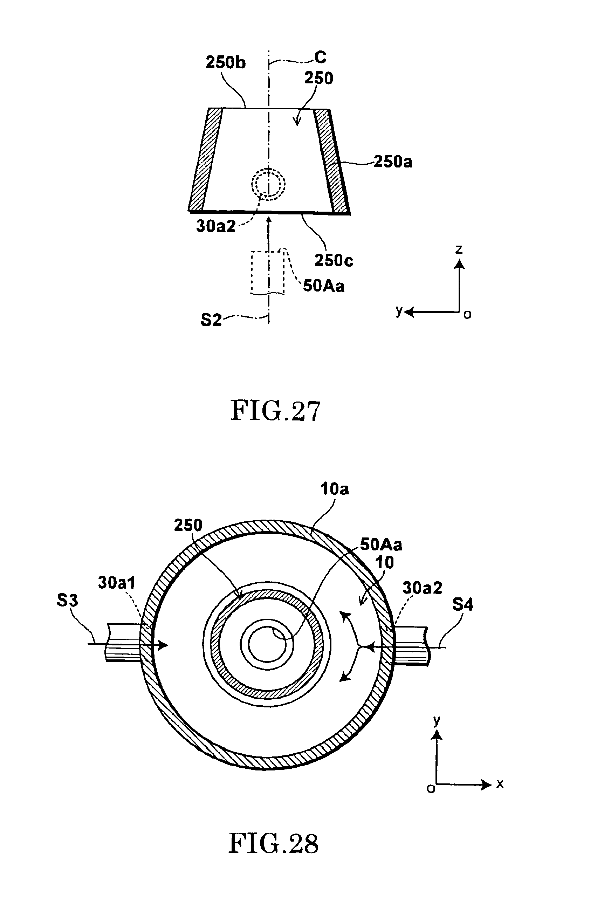

FIG 26 is a schematic cross-sectional view of the silicon manufacturing apparatus of the present embodiment; FIG 27 is an enlarged cross-sectional view taken on line C-C of FIG 26; and FIG 28 is an enlarged cross-sectional view taken on line D-D of FIG 26.

As shown in FIGS. 26 to 28, the silicon manufacturing apparatus 1T of the present embodiment differs from the silicon manufacturing apparatus 1S of the nineteenth embodiment in that the straightening member 200 is placed by a straightening member 250. Remaining other structures are identical to each other. Therefore, the present embodiment will be described below with a focus on such differing points and like or corresponding component parts bear like reference numerals to suitably simplify the description or to omit such a description.

More particularly, the straightening member 250, made of quartz or ceramic, is disposed in the reactor tube 10 to be coaxial with the central axis C thereof and supported with the support member M at the central portion 10c of the reactor tube 10 in the same manner as that of the nineteenth embodiment. However, the straightening member 250 differs from that of the nineteenth embodiment in that a circumferential wall 250a, surrounding the central axis, includes a truncated circular hollow cone member formed in a top-sliced hollow cone shape with a diameter decreasing from the lower side to the upper side in the reactor tube 10. Also, the straightening member 250 has the same structure as that of the nineteenth embodiment in that the zinc ejecting port 30a2 faces the circumferential wall 250a so as to assume an area closer to a lower end 250c than an upper end 250b of the circumferential wall 250a.

With such a truncated circular hollow cone member adopted as the circumferential wall 250a, silicon compound gas, ejected to the central portion 10c of the reactor tube 10 from the lower side to the upper side therein at the given ejecting pressure, mainly passes through an internal region surrounded with the circumferential wall 250a to flow from a lower side to an upper side in the central portion 10c. When this takes place, the circumferential wall 250a, formed in the top-sliced hollow cone shape with the diameter decreasing from the lower side to the upper side, restricts the flow of silicon compound gas with a resultant increase in flow speed of silicon compound gas.

Further, due to such a flow of ejected silicon compound gas, a pressure gradient will also increase in which a pressure, present in a region between the circumferential wall 250a and the central portion 10c and an associated downstream area, decreases from a lower side to an upper side.

Here, the zinc ejecting port 30a2 ejects zinc gas to the inside of the central portion 10c of the reactor tube 10 at a given ejecting pressure in a zinc ejecting direction S4 oriented in a direction perpendicular to the central axis C of the reactor tube 10 is deflected downward and upward in the cross-section shown in FIG 26 and deflected clockwise and counterclockwise about the central axis C so as to surround the circumferential wall 250a in the cross-section shown in FIG 28. Zinc gas, ejected in such a way, has an increasing pressure gradient in the region between the circumferential wall 250a and the central portion 10c and the associated downstream area in variation from the lower side to the upper side. Thus, zinc gas is subjected to a further increased pressure to mainly flow at a further increased flow speed in a stream oriented from the lower side to the upper side. In addition, zinc gas, oriented from the lower side to the upper side in such a way, also flows along the circumferential wall 250a formed in the top-sliced hollow cone shape with the diameter decreasing from the lower side to the upper side. This allows zinc gas to further smoothly merge with silicon compound gas, passing through the internal region surrounded with the circumferential wall 250a to flow at a given flow speed from a lower side to an upper side, in an area above the straightening member 250.

Even with the present embodiment, therefore, silicon compound gas mainly passing through the internal region surrounded with the circumferential wall 250a of the straightening member 250 to flow at the given flow speed from the lower side to the upper side, zinc gas mainly passing through a space between the circumferential wall 250a and the opposing central portion 10c to flow from the lower side to the upper side, and zinc gas mainly passing through the internal region surrounded with the circumferential wall 250a of the straightening member 250 to flow from the lower side to the upper side merge mainly in the straightening member 250 at an upper side thereof. This allows these gases to be subjected to reduction reaction to yield silicon powder and zinc chloride, which are exhausted from the exhaust port 60 placed in an area above the reactor tube 10, upon which silicon is selectively collected to obtain silicon.

With such a structure mentioned above, accordingly, by forming the straightening member 250 with the truncated circular hollow cone member with the diameter decreasing from the lower side to the upper side in the reactor tube 10, silicon compound gas, passing through the straightening member 250, is restricted in flow to have an increased flow speed with the resultant pressure gradient oriented from the lower side to the upper side along the flow of deflected zinc gas. This allows silicon compound gas and zinc gas to further smoothly and reliably flow upward to merge with each other, enabling reduction reaction to be efficiently initiated between silicon compound gas and zinc gas.

### (Twenty-first Embodiment)

Next, a silicon manufacturing apparatus of a twenty-first embodiment according to the present invention will be described below in detail.

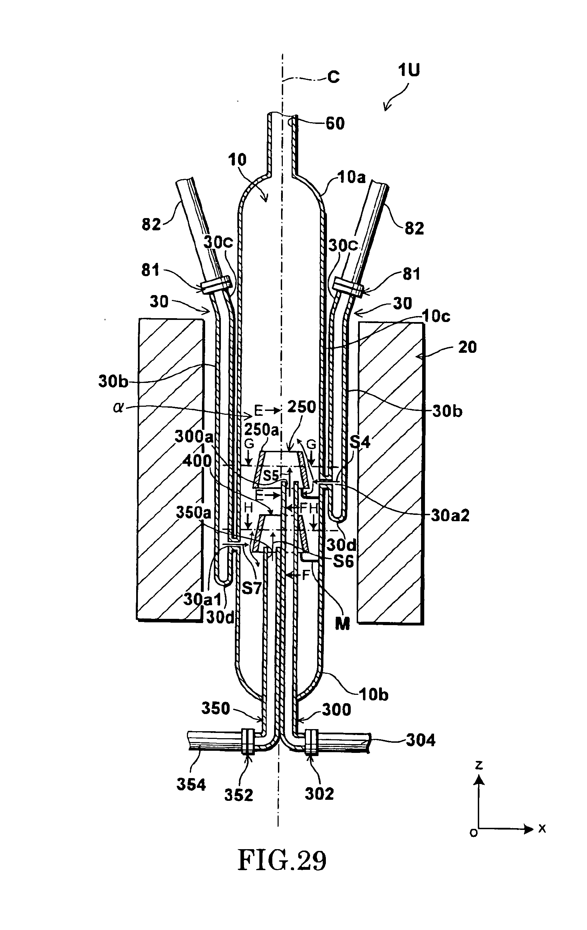

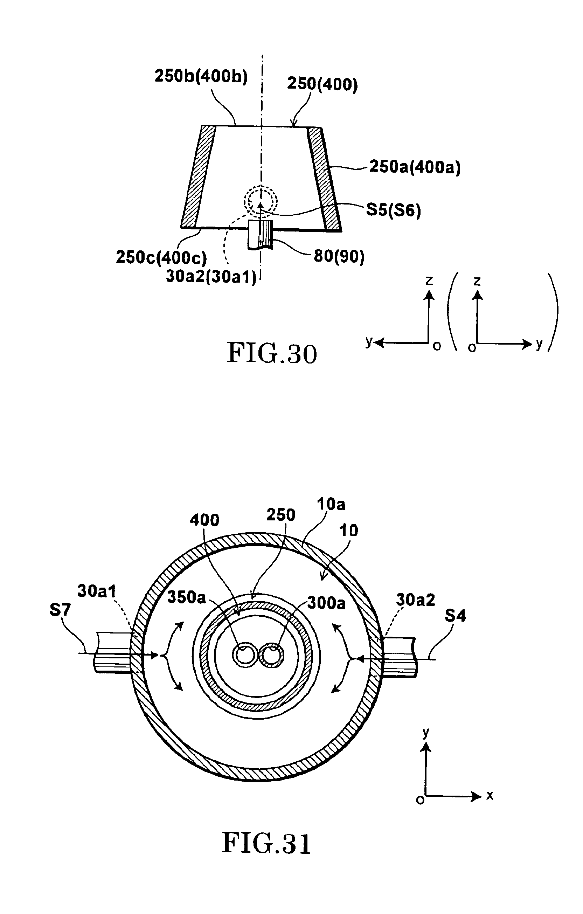

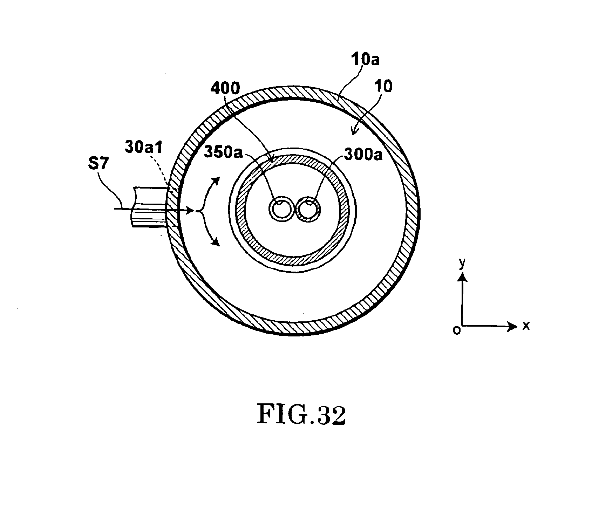

FIG 29 is a schematic cross-sectional view of the silicon manufacturing apparatus of the present embodiment. FIG 30 is an enlarged cross-sectional view taken on line E-E of FIG 29 and also represents an enlarged cross-sectional view taken on line F-F of FIG 29 with reference numerals put in brackets for the sake of convenience. FIG 31 is an enlarged cross-sectional view taken on line G-G of FIG 29 and FIG 32 is an enlarged cross-sectional view taken on line H-H of FIG 29

As shown in FIGS. 29 to 32, the silicon manufacturing apparatus 1U of the present embodiment differs from the silicon manufacturing apparatus 1T of the twentieth embodiment with an altered structure in that, in place of using the single silicon compound supply pipe 50A, a plurality of silicon compound supply pipes, comprised of upper silicon compound supply pipes 300 (first silicon compound supply pipes) and lower silicon compound supply pipes 350 (second silicon compound supply pipes), is connected to a lower end portion of the central portion 10c of the reactor tube 10 and, further, in addition to the upper straightening member (first straightening member) 250, a lower straightening member (second straightening member) 400 is additionally provided. Remaining other structures are identical to each other. Therefore, the present embodiment will be described below with a focus on such differing points and like or corresponding component parts bear like reference numerals to suitably simplify the description or to omit such a description.

More particularly, the straightening member 400 has the same structure and arrangement as those of the straightening member 250 except for a structure placed in a lower side. That is, the straightening member 400, made of quartz or ceramic, includes a truncated circular hollow cone member, formed in a top-sliced hollow cone shape, which is disposed in the reactor tube 10 to be coaxial with the central axis C thereof with a diameter decreasing from the lower side to the upper side in the reactor tube 10 and supported with the support member M at the central portion 10c of the reactor tube 10.

The upper and lower silicon compound supply pipes 300 and 350, both made of quartz glass, extend through the central portion 10c of the reactor tube 10 in contact with each other so as to sandwich the central axis C of the reactor tube 10 and have an upper silicon compound ejection port (first silicon compound ejection port) 300a and a lower silicon compound ejection port (second silicon compound ejection port) 350a. The upper silicon compound ejection port 300a ejects silicon gas compound gas into the reactor tube 10 along a silicon compound gas ejecting direction S5 in line with the central axis C and the lower silicon compound ejection port 350a ejects silicon gas compound gas into the reactor tube 10 along a silicon compound gas ejecting direction S6 in line with the central axis C, thereby supplying silicon compound gas to the reactor tube 10 at an adequate supply rate.

The upper and lower silicon compound supply pipes 300 and 350 are connected to silicon compound guide pipes 304 and 354, connected to a silicon compound gas source (not shown), through joint portions 302 and 352, respectively, at an area outside the central portion 10c of the reactor tube 10. The silicon compound guide pipes 304 and 354 are connected to the silicon compound gas source (not shown). Such a silicon compound gas source may store carrier gas that can be freely supplied or a separate carrier gas source may be provided.

Now, positional relationships among the straightening members 250 and 400, the silicon compound supply pipes 300 and 350 and the zinc ejecting ports 30a1 and 30a2 and flows of silicon compound gas and zinc gas will be described below in detail.

As shown in FIGS. 30 and 31, the present embodiment substantially differs from the twentieth embodiment in respect of the positional relationship between the straightening member 250 and the silicon compound supply pipe 300 such that the silicon compound ejection port 300a of the silicon compound supply pipe 300 is disposed in an internal region surrounded with the circumferential wall 250a of the straightening members 250. With the present embodiment, further, the silicon compound ejection port 300a is deviated in a positive direction of the x-axis by a distance corresponding to a diameter of the relevant pipe. Such a deviation rate is minimal and, hence, no consideration substantially needs to be taken.

Here, the silicon compound ejection port 300a, placed in the internal region surrounded with the circumferential wall 250a, ejects silicon compound gas into the central portion of the reactor tube 10 from a lower side to an upper side therein at a given ejecting pressure along the silicon compound ejecting direction S5 in line with the central axis C. Thus, ejected silicon compound gas flows upward from the lower side in the central portion 10c in a given flow speed distribution through the internal region surrounded with the circumferential wall 250a of the straightening members 250. Of course, due to the flow of such silicon compound gas ejected in such a way, a pressure gradient is created in the central portion 10c with a pressure decreasing from the lower side to the upper side, while causing another pressure gradient to occur in a space between the circumferential wall 300a and the opposing central portion 10c opposed thereto with a pressure decreasing from the lower side to the upper side. In addition, such a positional relationship may similar apply to the positional relationship between the straightening member 400 and the silicon compound supply pipe 350 as indicated in FIGS. 30 and 32 in detail.

The positional relationship between the straightening member 250 and the zinc ejecting port 30a2 is not different from that of the twentieth embodiment. However, since the silicon compound ejection port 300a of the silicon compound supply pipe 300 is disposed in the internal region surrounded with the circumferential wall 250a of the straightening members 250, zinc gas ejected the zinc ejecting port 30a2 substantially has no effect of undesirably interfering the ejection of silicon compound gas delivered from the silicon compound ejection port 300a.

Such a relative positional relationship can be freely set under a condition where the zinc ejecting port 30a2 is located in opposition to the circumferential wall 250a of the straightening members 250 and the silicon compound ejection port 300a is disposed in the internal region surrounded with the circumferential wall 250a of the straightening member 250. In addition, as shown in FIGS. 30 to 32 in detail, such a positional relationship may similarly apply to the positional relationship among the straightening member 400, the zinc ejecting port 30a1 and the silicon compound ejection port 350a.

With the present embodiment, therefore, silicon compound gas passing through the internal region surrounded with the circumferential wall 250a of the straightening member 250 to flow from the lower side to the upper side, silicon compound gas sequentially passing through the internal region surrounded with the circumferential wall 400a of the straightening member 400 and the internal region surrounded with the circumferential wall 250a of the straightening member 250 to flow from the lower side to the upper side, zinc gas passing through the space between the circumferential wall 250a and the central portion 10c to flow from the lower side to the upper side, and zinc gas passing through the space between the circumferential wall 400a and the opposing central portion 10c to flow through the internal region surrounded with the circumferential wall 250a of the straightening member 250 to pass from the lower side to the upper side merge with each other in an area above the straightening member 250. Then, reduction reaction takes place to produce silicon powder and silicon chloride, which are exhausted from the exhaust port 60 placed above the reactor tube 10 to selectively collect silicon to obtain the same.

With the structure set forth above, therefore, the straightening members are comprised of the first straightening member 250 placed in the reactor tube 10 at the upper side therein and the second straightening member 400 placed in the reactor tube 10 at the lower side therein. Further, the zinc supply pipes include the first zinc ejecting port 30a1 placed in the reactor tube 10 at an area lower than the first zinc ejecting port 30a2. With the second zinc ejecting port 30a1 located in face-to-face relation to the circumferential wall 250a of the straightening member 250, the flow of zinc gas can be reliably deflected even if a plurality of zinc ejecting ports are provided to supply zinc gas to the reactor tube 10 at an adequate supply rate.

Further, the silicon compound ejection ports include the first silicon compound ejection port 300a placed in the reactor tube 10 at the upper side therein, and the second silicon compound ejection port 350a placed in the reactor tube 10 at the lower side therein. In addition, the silicon compound ejection port 300a is disposed in the internal region surrounded with the circumferential wall 250a of the straightening member 250 and the silicon compound ejection port 350a is disposed in the internal region surrounded with the circumferential wall 400a of the straightening member 400. Thus, the provision of the plural silicon compound ejection ports allows silicon compound gas, passing through the reactor tube 10 from the lower side to the upper side therein, to be immediately supplied at an adequate supply rate, while enabling silicon compound gas to pass mainly through the region surrounded with the circumferential wall of the straightening member in a highly reliable manner.

With the embodiments set forth above, the zinc feeding mechanism 40A, described with reference to the first embodiment and the like, and the zinc feeding mechanism 40B, described with reference to the tenth embodiment and the like, may be substituted with each other in principle and may be suitably applied to other embodiments.

Further, the heat absorbing member 200, described with reference to the seventh embodiment, may be suitably applied to other embodiments.

Furthermore, the silicon powder accumulating mechanism 100, described with reference to the seventh embodiment and the like, and the silicon powder accumulating and takeoff mechanism 150, described with reference to the ninth embodiment and the like, may be suitably applied to other embodiments.

Moreover, the silicon powder accumulating mechanism 100, described with reference to the seventh embodiment and the like, and the silicon powder accumulating and takeoff mechanism 150, described with reference to the ninth embodiment and the like, may be applied in combination with the separator 62, described with reference to the first embodiment, and the silicon reservoir 63 described with reference to the first embodiment. The presence of such a structure results in an apparatus with a slight increase in size but preferably results in an effect of increasing an efficiency of collecting product silicon.

With the present invention, further, it is of course to be appreciated that a kind, an arrangement and the number of pieces of component members are not limited to those of the embodiments set forth above and modifications may be made without departing from the scope of the invention upon suitably substituting those component elements by those which provide equivalent operations and effects.

### [INDUSTRIAL APPLICABILITY]

As set forth above, the present invention provides a silicon manufacturing apparatus and its related method which are not complicated in an apparatus configuration to initiate reduction reaction at improved efficiency for increasing a rate of yielding silicon while concurrently enabling improvement in efficiency of separating and collecting product silicon and product gas. Therefore, it is expected that the present invention contribute to the manufacturing of the silicon material applicable to several electronic devices in versatile.

## Claims

1. A silicon manufacturing apparatus comprising:
a reactor tube standing upright with a central axis extending in a vertical direction for reacting zinc and silicon compound;
a zinc supply pipe having a heating portion for heating zinc to produce zinc gas and a zinc ejecting portion ejecting and supplying zinc gas to the reactor tube;
a zinc feeding section for feeding zinc into the zinc supply pipe;
a silicon compound supply pipe ejecting and supplying silicon compound gas into the reactor tube so as to allow silicon compound gas to flow through the reactor tube from a lower side to an upper side therein; and
a heating furnace disposed outside the reactor tube to define a heating region in which a part of the reactor tube, the heating portion and the zinc ejecting portion are placed to allow the reactor tube, through which zinc gas and silicon compound gas flow, to have a temperature distribution under which a temperature closer to the central axis is lower than that closer to a side circumference wall of the reactor tube.

2. The silicon manufacturing apparatus according to claim 1, wherein:
the heating furnace stands upright in the vertical direction; the reactor tube has an upper portion formed with an exhaust port for exhausting reaction product gas between zinc and silicon compound; the reactor tube has a central portion, to which the zinc ejecting portion of the zinc supply pipe is disposed, and a lower portion to which the silicon compound supply pipe is connected; the zinc supply pipe stands upright in the vertical direction and has an upper portion to which the zinc feeding portion is connected; and the heating region involves the central portion of the reactor tube.

3. The silicon manufacturing apparatus according to claim 1, wherein:
the zinc ejecting portion includes a plurality of ejecting portions placed on the zinc supply pipe in the vertical direction or a radial direction.

4. The silicon manufacturing apparatus according to claim 1, wherein:
at least one of the zinc ejecting portion and the silicon compound ejecting portion is formed in plural areas spaced in the vertical direction in a multiple-stage structure.

5. The silicon manufacturing apparatus according to claim 1, further comprising:
A silicon powder accumulating mechanism, disposed in an area below the reactor tube, which includes an upper gate valve, a lower gate valve, an accumulating compartment defined between the upper gate valve and the lower gate to allow silicon powder, produced in the reactor tube, to free-fall for accumulation, and a gate valve controller controllably opening or closing the upper gate valve and the lower gate valve.

6. The silicon manufacturing apparatus according to claim 1, further comprising:
a silicon powder takeout member, disposed in an area below the reactor tube, which includes an accumulating section for melting and accumulating silicon powder produced in the reactor tube, an exhaust port for permitting melted silicon, accumulated in the accumulating section, to be exhausted to the outside of the reactor tube, and a holding section for temporarily holding silicon exhausted from the exhaust port, and a heating section for heating the silicon powder takeout member.

7. The silicon manufacturing apparatus according to claim 1, wherein:
the zinc feeding section includes a zinc feeding member composed of a liquid pool portion having a concaved shape in cross section surrounded with a circumferential wall for pooling melted zinc, an upright portion standing upright from a bottom portion of the liquid pool portion and having a height lower than that of the circumferential wall, and a through-bore extending from an upper side of the upright portion to a lower side thereof so as to penetrate therethrough, the zinc feeding section being detachably mounted on an upper portion of the zinc supply pipe.

8. The silicon manufacturing apparatus according to claim 7, wherein:
the zinc feeding member is made of single crystalline silicon or a multicrystalline silicon.

9. The silicon manufacturing apparatus according to claim 1, wherein:
the zinc feeding member includes a zinc feeding pipe connected to an upper portion of the zinc supply pipe via a joint portion in an area outside the heating region; and a zinc supply device through which solid zinc free-falls into the zinc supply pipe.

10. The silicon manufacturing apparatus according to claim 1, wherein:
the zinc supply pipe includes an extending portion extending downward beyond the zinc ejecting portion and placed in the heating region.

11. The silicon manufacturing apparatus according to claim 10, wherein:
the extending portion includes a heat absorbing member for absorbing heat generated by the heating section.

12. The silicon manufacturing apparatus according to claim 11, wherein:
the heat absorbing member is made of single crystalline silicon or a multicrystalline silicon.

13. The silicon manufacturing apparatus according to claim 1, wherein:
the zinc supply pipe is placed in an area outside the reactor tube and extends through a space between the reactor tube and the heating furnace; and the zinc ejecting portion is a connecting portion communicating with an inside of the reactor tube.

14. The silicon manufacturing apparatus according to claim 1, wherein:
the zinc supply pipe penetrates into an inside of the reactor tube and vertically extends through the reactor tube, and the zinc ejecting portion includes an opening opened to the inside of the reactor tube.

15. The silicon manufacturing apparatus according to claim 1, wherein:
the temperature distribution allows a temperature to progressively decrease from a side circumferential surface of the reactor tube to the central axis.

16. The silicon manufacturing apparatus according to claim 1, wherein:
the silicon compound is silicon tetrachloride and ejected to the reactor tube at a temperature higher than a boiling point thereof and a temperature lower than 100°C.

17. The silicon manufacturing apparatus according to claim 1, further comprising:
a straitening member located in the reactor tube; wherein the zinc ejecting portion includes a first zinc ejecting portion; the silicon compound ejecting portion ejects and supplies the silicon compound into the reactor tube in a first ejecting direction; the first zinc ejecting portion ejects and supplies zinc to the reactor tube in a second ejecting direction; the straitening member allows zinc gas, ejected from the first ejecting portion in the second ejecting direction, to be deflected while permitting silicon compound gas, ejected from the silicon compound ejecting portion in the first ejecting direction, to flow from a lower side to an upper side in the reactor tube.

18. The silicon manufacturing apparatus according to claim 17, wherein:
the straitening member includes a annular cylindrical member vertically standing upright or a truncated circular hollow cone member vertically standing upright with a diameter decreasing from the lower side to the upper side in the reactor tube.

19. The silicon manufacturing apparatus according to claim 17, wherein:
the silicon compound ejecting portion is disposed in face-to-face relation to a region surrounded with a circumferential wall of the straitening member.

20. The silicon manufacturing apparatus according to claim 17, wherein:
the silicon compound ejecting portion is disposed in a region surrounded with a circumferential wall of the straitening member.

21. The silicon manufacturing apparatus according to claim 17, wherein:
the first zinc ejecting portion is disposed in association with a circumferential wall of the straitening member.

22. The silicon manufacturing apparatus according to claim 21, wherein:
the first zinc ejecting portion is disposed in face-to-face relation to a circumferential wall of the straitening member at a lower side portion thereof.

23. The silicon manufacturing apparatus according to claim 17, wherein:
the zinc ejecting portion further includes a second zinc ejecting portion that is disposed inside the reactor tube at an area lower than the first zinc ejecting portion to be disposed in below the silicon compound ejecting portion.

24. The silicon manufacturing apparatus according to claim 17, wherein:
the straitening member includes a first straitening member disposed in the upper side in the reactor tube and a second straitening member disposed in the lower side in the reactor tube; the zinc ejecting portion further includes a second zinc ejecting portion disposed in the reactor tube at an area lower than the first zinc ejecting portion; the first zinc ejecting portion is disposed in association with a circumferential wall of the first straitening member; and the second zinc ejecting portion is disposed in association with a circumferential wall of the second straitening member.

25. The silicon manufacturing apparatus according to claim 17, wherein:
the silicon compound ejecting portion includes a first silicon compound ejecting portion placed in the upper side in the reactor tube and a second silicon compound ejecting portion placed in the lower side in the reactor tube; the first silicon compound ejecting portion is disposed in a region surrounded with a circumferential wall of the first straitening member; and the second silicon compound ejecting portion is disposed in a region surrounded with a circumferential wall of the second straitening member.

26. A method of manufacturing silicon, the method comprising the steps of:
heating a reactor tube, vertically standing upright, with a heating furnace disposed around the reactor tube;
ejecting and supplying zinc gas into the reactor tube;
supplying silicon compound gas into the reactor tube by ejecting silicon compound gas upward along a central axis of the reactor tube from an area lower than a position in which zinc gas is ejected ; and
producing silicon powder upon reducing silicon compound gas with zinc gas under a temperature distribution maintained in the reactor tube such that a temperature closer to the central axis of the reactor tube is lower than that closer to a side circumferential wall of the reactor tube.
